(19) Europäisches Patentamt
European Patent Office
Office européen des brevets

(11) **EP 4 462 895 A1**

(12) **EUROPEAN PATENT APPLICATION**

(43) Date of publication:
**13.11.2024 Bulletin 2024/46**

(21) Application number: **23172980.7**

(22) Date of filing: **11.05.2023**

(51) International Patent Classification (IPC):
*H04W 56/00* $^{(2009.01)}$     *G01S 5/00* $^{(2006.01)}$
*G01S 13/84* $^{(2006.01)}$

(52) Cooperative Patent Classification (CPC):
**H04W 56/0015; G01S 5/00; G01S 13/84;
G01S 13/878; H04W 56/0025; H04W 56/0035**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Stichting IMEC Nederland
5656 AE Eindhoven (NL)**

(72) Inventors:
• **Farsaei, Amirashkan
2641 BW Pijnacker (NL)**
• **Sheikh, Alireza
5629 KH Eindhoven (NL)**
• **Jac, Romme
3118 JP Schiedam (NL)**

(74) Representative: **AWA Sweden AB
Box 5117
200 71 Malmö (SE)**

(54) **A METHOD AND A SYSTEM FOR ESTIMATING RELATIVE TIME OFFSET AND RELATIVE CLOCK SKEW**

(57)     A method for estimating relative time offset and relative clock skew between a first radio transceiver (102; 402) and a second radio transceiver (104; 404), said method comprising: receiving (202) coarse information of the relative time offset and relative clock skew; receiving (204) and transmitting (206) signals at sequences of frequencies by switching of frequencies by the first radio transceiver (102; 402) in synchronization with a switching of frequency by the second radio transceiver (104; 404), wherein switching of frequencies is performed by coherent frequency switching, and wherein sequences of frequencies include sub-sequences of increasing frequency values and decreasing frequency values, respectively, performing (208) phase measurements for each frequency; determining (210) weighted average phase difference values between sequential frequency values; and determining (214) a fine estimate of the relative time offset and relative clock skew based on the weighted average phase difference values.

LO frequency of master B (——) and slave A (-----)

Fig. 4a

EP 4 462 895 A1

**Description**

Technical field

The present description relates to a method and a system for estimating relative time offset and relative clock skew between a first radio transceiver and a second radio transceiver. The present description also relates to a method for performing localization of a movable radio transceiver. The method for performing localization may use a plurality of radio transceivers for which relative time offset and relative clock skew has been determined.

Background

Localization of devices is used in various applications, such as asset tracking, human behavior monitoring and keyless entry. Localization of devices may utilize ranging between devices, such that distances between devices are used for providing localization.

Ranging between two radio signal transceivers may be performed based on determining a time duration for signal propagation between the radio signal transceivers. The time duration for signal propagation along a line-of-sight between the radio signal transceivers may be converted to a distance between the radio signal transceivers.

When ranging is used for localization of a device, for instance a movable radio signal transceiver, a plurality of fixed radio signal transceivers may be used for defining a framework in which the movable radio signal transceiver may be localized. Ranging may thus be performed between the movable radio signal transceiver and each of the fixed radio signal transceivers and based on a plurality of distance relationships between the movable radio signal transceiver and respective fixed radio signal transceivers, the location of the movable radio signal transceiver may be determined.

Ranging may utilize a bidirectional exchange of signals between two radio signal transceivers, which may be referred to as "two-way ranging". However, two-way ranging may require relatively high power consumption, since signals need to be transmitted in both directions, e.g., both from the movable radio signal transceiver to the fixed radio signal transceiver and from the fixed radio signal transceiver to the movable radio signal transceiver. It may be very important to limit power consumption. For instance, both the movable radio signal transceiver and the fixed radio signal transceivers may run on battery. In particular, the fixed radio signal transceivers may be installed in fixed locations and it may be desired that the fixed radio signal transceivers are able to operate for a very long time without need of exchanging or charging of battery.

In order to limit power consumption, it would be preferable to use "one-way ranging", in which a unidirectional exchange of a signal between the two radio signal transceivers may be used. For instance, one-way ranging may imply that only the movable radio signal transceiver transmits a signal to the fixed radio signal transceiver for performing ranging between the movable radio signal transceiver and the fixed radio signal transceiver.

One-way ranging may not be immediately used, because there is an inherent ambiguity between time offset of clocks and propagation delay between the radio signal transceivers. However, it is realized that one-way ranging may be utilized between the movable radio signal transceiver and each of the fixed radio signal transceivers if the fixed radio signal transceivers are synchronized. If time offset between clocks of the fixed radio signal transceivers is known and remains valid, one-way ranging may be utilized between the movable radio signal transceiver and the fixed radio signal transceivers.

Accurate ranging is needed in order to provide accurate localization of the device. This further means that if one-way ranging is to be utilized, the synchronization between the fixed radio signal transceivers needs to be very accurate. Further, the synchronization may need to be updated at regular intervals. Therefore, in order to limit power consumption of the fixed radio signal transceivers, it is desired that the synchronization is relatively simple and requires limited processing for determining time offsets.

Summary

An objective of the present description is to provide accurate synchronization, such as determining a relative time offset and a relative clock skew, between a first radio signal transceiver and a second radio signal transceiver. A particular objective of the present description is to provide accurate synchronization in an efficient manner.

These and other objectives are at least partly met by the invention as defined in the independent claims. Preferred embodiments are set out in the dependent claims.

According to a first aspect, there is provided a method for estimating relative time offset and relative clock skew between a first radio transceiver and a second radio transceiver, said method comprising: receiving coarse information relating to the relative time offset and relative clock skew; receiving, by the first radio transceiver, signals at a first sequence of frequencies from the second radio transceiver and transmitting signals at a second sequence of frequencies to the second radio transceiver, wherein a switching of frequencies in the second sequence by the first radio transceiver is performed in synchronization with a switching of frequency in the first sequence by the second radio transceiver, wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values; performing, by the first radio transceiver, a phase measurement for each frequency of the first sequence of frequencies of the received signals; determining a first weighted average phase difference value between sequential frequency values in the first sub-sequence and a second weighted average phase difference value between sequential frequency values in the second sub-sequence; receiving information relating to a third weighted average phase difference value between sequential frequency values in the third sub-sequence and a fourth weighted average phase difference value between sequential frequency values in the fourth sub-sequence based on phase measurements performed by the second radio transceiver for each frequency of the second sequence of frequencies; and determining a fine estimate of the relative time offset and relative clock skew based on the first, second, third, and fourth weighted average phase difference values.

The method utilizes the first and second radio signal transceivers being able to perform coherent frequency switching. This implies that phase information from a plurality of frequencies may be utilized without an ambiguity in phase based on the switching of frequencies.

According to the method, a first and a second sequence of frequencies are used. Thanks to the first sequence and the second sequence each including two sub-sequences having increasing frequency values and decreasing frequency values, respectively, the method enables avoiding non-linear terms in determination of the relative time offset and relative clock skew of the first and second radio signal transceivers. This implies that the method enables determining the fine estimate of the relative time offset and relative clock skew in a fast and resource efficient manner.

As used herein, the term "sub-sequence of increasing frequency values" implies that a plurality of frequencies (at least two) are provided sequentially in time, wherein for each pair of a first frequency value in the sub-sequence at a first point in time and a second frequency value in the sub-sequence at a second point in time later than the first point in time, the second frequency value is larger than the first frequency value. Similarly, the term "sub-sequence of decreasing frequency values" implies that a plurality of frequencies (at least two) are provided sequentially in time, wherein for each pair of a first frequency value in the sub-sequence at a first point in time and a second frequency value in the sub-sequence at a second point in time later than the first point in time, the second frequency value is smaller than the first frequency value.

It should be realized that the sub-sequence of increasing frequency values and the sub-sequence of decreasing frequency values may share one frequency value. Thus, if the sub-sequence of increasing frequency values includes X number of frequencies and the sub-sequence of decreasing frequency values includes Y number of frequencies, performing a phase measurement for each frequency may involve performing X+Y-1 number of phase measurements as the sub-sequences of increasing frequency values and decreasing frequency values share one frequency value.

As used herein, coherent frequency switching implies that a phase trajectory, i.e., variation of phase, of a signal is continuous while frequency is switched. Thus, there is no step change in the phase of the signal subject to coherent frequency switching when frequency is switched. This implies that the information from phase measurements for different frequencies may be easily combined as there is no phase ambiguity introduced by the switching of frequencies.

The sub-sequence of increasing frequency values and the sub-sequence of decreasing frequency values may be arranged in any order in the sequence. Thus, the sub-sequence of increasing frequency values may be followed by the sub-sequence of decreasing frequency values, but alternatively the sub-sequence of decreasing frequency values may be followed by the sub-sequence of increasing frequency values. Also, a number of frequency values in each sub-sequence of a sequence may be identical or may be different.

According to an embodiment, the sub-sequence of increasing frequency values is symmetric with the sub-sequence of decreasing frequency values. That is, each sub-sequence may have a same number of frequency values and may comprise the same frequency values. The method may be configured to utilize the symmetry to enable determining the fine estimate of the relative time offset and relative clock skew in a fast and resource efficient manner.

It should further be realized that the first sequence and the second sequence may be intended to be identical. However, due to the relative time offset and relative clock skew, the first and the second sequence may not be exactly identical. Nevertheless, the number of frequency values of the first sequence may be identical to the number of frequency values of the second sequence.

The switching of frequencies by the first radio signal transceiver is performed in synchronization with a switching of frequency in the first sequence by the second radio signal transceiver does not necessarily imply that the first and second radio signal transceivers switch frequencies at exactly the same point in time. For instance, time offset or clock skew may imply that the switching of frequencies occurs at slightly different points in time. However, the switching of frequencies may be viewed as being synchronized in terms of the first radio signal transceiver and the second radio signal transceiver attempting to switch frequencies at a same point in time.

The first and second radio signal transceivers are thus configured to perform switching of frequencies in synchronization such an attempt is made to switch the frequencies in the first sequence at a same time as the switching of frequencies in the second sequence. When the phase measurements are performed, a phase of the received signal is compared to a phase of a local signal at the transceiver which receives the received signal. Since there is a relative time offset and a relative clock skew between the clocks of the first and second, the switching of frequencies will not occur at exactly the same time. This implies that the phase measurements will change over time. Hence, a phase difference value may be determined for sequential frequency values within the sequence of frequencies of the received signal. The phase difference value may thus comprise information of relative clock function of the first and the second radio signal transceivers. By utilizing the phase difference values, the relative time offset and relative clock skew may be determined.

Using a plurality of frequency values in the first and second frequencies, it is possible to determine a plurality of phase difference values between sequential frequency values. It should be realized that the plurality of phase difference values may be utilized in different manners. For instance, each of the phase difference values may be taken into account. A weighted average phase difference value may be determined, for instance, by determining a weighted average using each phase difference value for all sequential frequency values in the respective sub-sequences. However, it should be realized that all sequential frequency values are not necessarily used. For instance, if an outlier value is identified, the outlier value may be ignored. The weighted average may be formed by giving all phase difference values an equal weight or by giving different weights to different phase difference values.

Both the first radio signal transceiver and the second radio signal transceiver may be fixed radio signal transceivers that are to be used for localization of movable radio signal transceivers in an environment in which the first and second radio signal transceivers are arranged. However, it should be realized that the first and second radio signal transceivers need not necessarily be stationary. For instance, the first and second radio signal transceivers may be arranged in a movable environment so as to be moved in a common manner (such as being arranged in different places on a moving object, such as a bus or train). Also, the first and second radio signal transceivers may be configured to be intermittently moved in relation to each other. The relative time offset and relative clock skew may apply for a particular spatial relation between the first and the second radio signal transceivers. As soon as one of the radio signal transceivers is moved in relation to the other, a synchronization update to determine a new relative time offset and a new relative clock skew may be needed.

Although the first and second radio signal transceivers are mainly described herein from a perspective of using the first and second radio signal transceivers for enabling localization of movable radio signal transceivers, it should be realized that the first and second radio signal transceivers may be used in any application in which synchronization of the first and second radio signal transceivers to each other is useful.

The method for estimating the relative time offset and relative clock skew as defined in the first aspect may be performed in full by the first radio signal transceiver. The first radio signal transceiver may thus be configured to receive information relating to phase measurements performed by the second radio signal transceiver and then determine the fine estimate of the relative time offset and relative clock skew.

However, it should be realized that different parts of the method may be performed by different entities. For instance, processing of the phase measurements may be performed by a processing unit, which is arranged separately from the first and the second radio signal transceivers. Also, processing may be distributed. For instance, a separate processing unit may be configured to receive the first and second weighted average phase difference values from the first radio signal transceiver and the third and fourth weighted average phase difference values from the second radio signal transceiver and then determine the fine estimate of the relative time offset and the relative clock skew. Alternatively, the separate processing unit may be configured to also determine the weighted average phase difference values based on receiving phase measurement results from the first and the second radio signal transceivers.

Further, a coarse determination of the relative time offset and relative clock skew may be performed in many different manners. For instance, a time stamping technique may be used. The coarse determination may alternatively be performed using phase measurements based on signal transmission between the first and second radio signal transceivers. For instance, the first radio signal transceiver may be configured to receive a known signal from the second radio signal transceiver and may be configured to determine the coarse information relating to the relative time offset and relative clock skew based on phase measurements of the known signal. The coarse information may be determined by a different entity than an entity that determines the fine estimate of the relative time offset and relative clock skew. Thus, receiving the coarse information may imply that the entity that is to determine the fine estimation received the relative time offset and relative clock skew as determined from another entity. However, receiving the coarse information may imply that an algorithm for determining the fine estimate may receive the relative time offset and relative clock skew as determined by another algorithm within the same physical entity or processing unit. In addition, receiving the coarse information relating to the relative time offset and relative clock skew may imply that information allowing the relative time offset and relative clock skew to be determined is received.

The coarse information may be used for defining a range of values of the relative time offset and relative clock skew. The fine estimate may then be able to determine the relative time offset and relative clock skew within ranges defined by the coarse information. The fine estimate may provide an improved accuracy of relative time offset and relative clock skew compared to the coarse information.

In context of ranging, any error in determination of time may translate to an error in distance estimation.

Thanks to determining the fine estimate of the relative time offset between the first and the second radio signal transceivers with very high accuracy, the first and the second radio signal transceivers may be used in determining a location of a movable radio signal transceiver that estimates distance in relation to the first and second radio signal transceiver (and possibly further radio signal transceivers for which the relative time offset has also been determined).

This enables performing ranging using one-way ranging between the movable radio signal transceiver and each of the first and second radio signal transceivers. The knowledge of the relative time offset may ensure that distance estimates between the movable radio signal transceiver and each of the first and second radio signal transceiver may each be based on a unidirectional exchange of a signal between the movable radio signal transceiver and each of the first and the second radio signal transceiver.

The signals at the first sequence of frequencies may be formed by a local oscillator signal of the second radio signal transceiver. The signals at the second sequence of frequencies may be formed by a local oscillator signal of the first radio signal transceiver.

The phase measurements may be performed by the first radio signal transceiver based on mixing the received signal with a local oscillator signal and determining a phase based on a mixed down signal. It should be realized that the phase measurements may be performed using in-phase (I) and quadrature (Q) components, hereinafter referred to as IQ measurements. Samples acquired by IQ measurements may be referred to as IQ samples.

For IQ measurements, quality of phase determination may vary with signal strength and noise strength. For strong signal-to-noise ratio of signals, phase determination may be more accurate.

As used herein, the relative time offset between the first radio signal transceiver and the second radio signal transceiver means a time offset between clocks of the first and the second radio signal transceivers. Thus, the relative time offset may be a difference in time between a time represented by the clock of one of the first and second radio signal transceivers and a time represented by the clock of the other of the first and second radio signal transceivers. For instance, the time represented by the clock of the first radio signal transceiver may be considered to define a reference time. The time represented by the clock of the second radio signal transceiver may thus correspond to relative time offset in relation to the reference time.

As used herein, the relative clock skew between the first radio signal transceiver and the second radio signal transceiver means a difference in speed of the clocks of the first and the second radio signal transceivers. Thus, the relative clock skew may be a difference in a speed of the clock of one of the first and second radio signal transceivers and a speed of the clock of the other of the first and second radio signal transceivers. The clock skew will cause a change in relative time offset over time, such that an initial relative time offset at an initial point in time will be changed based on the relative clock skew. The relative time offset at a particular point in time may thus be given by the initial relative time offset as changed by the relative clock skew.

According to an embodiment, the received signals and the transmitted signals are unmodulated signals.

The received signals and the transmitted signals may thus be directly based on a local oscillator signal of the second radio signal transceiver and the first radio signal transceiver, respectively. This facilitates performing phase measurements since the receiving radio signal transceiver may compare a received signal directly with its own local oscillator signal.

The signals may thus be considered to be unmodulated signals in that there is no modulation based on information to be carried by a carrier wave. Rather, the received signals and the transmitted signals may be formed by an unmodulated carrier wave.

The use of unmodulated signals implies that the signals are simple to generate. Further, the unmodulated signals may be simple to process as there is no need to extract information used for modulating a carrier wave.

According to an embodiment, the fine estimate of the relative time offset is determined with an accuracy better than 1 ns.

In context of ranging, any error in determination of time may translate to an error in distance estimation. Thus, an accuracy of 1 ns may translate to an accuracy of distance estimation of 30 cm. The method may thus enable determination of relative time offset with a very high accuracy such that distance estimations may also be performed with very high accuracy. This accuracy may advantageously be used when performing ranging using one-way ranging between the movable radio signal transceiver and each of the first and second radio signal transceivers.

It should be realized that the fine estimate of the relative time offset need not necessarily be determined with an accuracy better than 1 ns. The accuracy needed may depend on an application in which relative time offset is to be used and the accuracy may be selected in dependence of needs of the application.

According to an embodiment, wherein the first and/or the second radio signal transceiver is configured to tune a clock oscillator based on the coarse information of relative clock skew.

The relative clock skew may provide information on how the relative time offset will develop over time. In order to avoid a large drift in the relative time offset, the first and/or the second radio signal transceiver may be configured to tune its respective clock oscillator. This implies that the clock oscillator(s) may be tuned such that the clock oscillator of the first radio signal transceiver may have an identical or almost identical clock speed as the clock oscillator of the second radio signal transceiver. It should be realized that tuning may not allow completely or perfectly compensating for the relative clock skew such that there may be a remaining relative clock skew even after tuning of the clock oscillator(s).

Both the first and the second radio signal transceiver may be configured to tune its respective clock oscillator in order to ensure that the clock oscillators have identical or almost identical clock speed. However, it should be realized that only one of the first and the second radio signal transceivers may be configured to tune its clock oscillator. If the relative clock skew is to be compensated in a system having more than two radio signal transceivers, it may be advantageous to define a reference clock speed based on one radio signal transceiver and tune the clock oscillators of all other radio signal transceivers based on the relative clock skew in relation to the reference clock speed. This may simplify ensuring that the clock speeds of all radio signal transceivers are identical or almost identical.

The tuning of the clock oscillator may simplify accurately determining of the fine estimate of the relative time offset and the relative clock skew, since the relative clock skew is smaller when the coarse information is used for compensating for coarsely determined relative clock skew.

In addition, tuning of the clock oscillator implies that a change in relative time offset will be slower. This implies that longer intervals between updating of determination of the relative time offset and relative clock skew may be performed may be used.

According to an embodiment, the first or the second radio signal transceiver is configured to manipulate phase and/or frequency of a clock signal based on the coarse information of relative clock skew to compensate for the relative clock skew.

The first or the second radio signal transceiver may thus be configured to compensate for a carrier frequency offset. The first or the second radio signal transceiver may use digital processing or may manipulate phase of the clock signal such that the relative clock skew is compensated. Thus, a compensation for relative clock skew based on the coarse information may be provided even if tuning of the clock oscillator is not available.

It should be realized that it may not be necessary to provide any compensation based on coarse information of the relative clock skew. Rather, the coarse information may be used merely as input for determining the fine estimate of the relative time offset and the relative clock skew.

Instead of trying to improve synchronization of clock oscillators by tuning a clock oscillator or manipulating a clock signal, knowledge of the relative time offset and relative clock skew may be utilized in processing results based on time measurements performed by the first and the second radio signal transceivers. Thus, in such processing of results, an error due to relative time offset and relative clock skew may be compensated.

According to an embodiment, estimation of the relative time offset and the relative clock skew is updated at regular time intervals.

By performing regular updates of the estimation of the relative time offset and the relative clock skew, knowledge of a relation between the clock signals of the first and the second radio signal transceivers may be maintained.

The relative clock skew may allow determining the actual relative time offset at a particular point in time between updates. Thus, the relative time offset may represent a time offset at an initial point in time at which the estimation is performed.

According to an embodiment, the first radio transceiver and the second radio transceiver are arranged at fixed locations at least during a time period for performing the estimation.

This implies that there will be no error introduced by the first and second radio transceivers being moved during the estimation of the relative time offset and relative clock skew. It should be realized that the first and second radio signal transceivers need not necessarily be completely static and never allowed to be moved from a fixed location. However, when the first and/or the second radio signal transceiver is moved, the relative time offset may be affected, such that a determined relative time offset no longer applies. Thus, an update of the estimation of the relative time offset and relative clock skew may be needed when the first and/or the second radio transceiver is moved. This may further be handled by performing regular updates such that the first and/or second radio signal transceiver may be considered to be stationary between updates.

According to a second aspect, there is provided a method for estimating relative time offsets and relative clock skews between a master radio transceiver and a plurality of slave radio transceivers, said method comprising: for each of the plurality of slave radio transceivers, performing the method according to the first aspect, wherein the master radio transceiver acts as the first radio transceiver and a respective one of the plurality of slave radio transceivers acts as the second radio transceiver.

Effects and features of this second aspect are largely analogous to those described above in connection with the first aspect. Embodiments mentioned in relation to the second aspect are largely compatible with the first aspect.

Thus, the relative time offset and relative clock skew may be determined for a plurality of radio signal transceivers. One radio signal transceiver, e.g., the first radio signal transceiver according to the first aspect, may be defined as a master radio signal transceiver. Then, the other radio signal transceivers may be slave radio signal transceivers and the relative time offset and relative clock skew may be determined for each slave radio signal transceiver in relation to the master radio signal transceiver.

This enables that the time relations of the clock signals of many radio signal transceivers may be known such that measurements performed by each of the radio signal transceivers may be jointly analyzed without an error due to mismatch of time offset or clock skew causing incorrect analysis results.

Thanks to setting one of the radio signal transceivers as a master, the relative time offset and relative clock skew may be determined in relation to a common reference formed by the master radio signal transceiver.

According to an embodiment, the master radio transceiver is configured to perform said transmitting signals once for all of the plurality of slave radio transceivers, wherein the slave radio transceivers are configured to simultaneously perform phase measurements based on transmitted signals from the master radio transceiver.

Thus, the transmitting of signals from the master radio signal transceiver may be broadcast for all of the plurality of radio signal transceivers. This implies that the master radio signal transceiver need not transmit the signals at the second sequence of frequencies separately for each of the second radio signal transceivers. This implies that determination of the relative time offset and the relative clock skew between the master radio signal transceiver and each of the plurality of slave radio signal transceiver may take less time compared to the master radio signal transceiver exchanging signals separately with each of the slave radio signal transceivers.

According to a third aspect, there is provided a method for performing localization of a movable radio transceiver in relation to a master radio transceiver and a plurality of slave radio transceivers, said method comprising: receive distance information based on a plurality of phase measurements, wherein each phase measurement of the plurality of phase measurements is performed by the master radio transceiver and/or one of the slave radio transceivers of the plurality of slave radio transceivers for a signal transmitted by the movable radio transceiver or each phase measurement of the plurality of phase measurements is performed by the movable radio transceiver for a signal transmitted by the master radio transceiver and/or one of the slave radio transceivers of the plurality of slave radio transceivers, wherein each phase measurement is representative of a respective distance between the movable radio transceiver and the master radio transceiver or one of the plurality of slave radio transceivers which performs the phase measurement, and wherein each phase measurement is related to a time of receipt of the signal; determine localization of the movable radio transceiver based on the distance information, wherein the distance information takes relative time offset and relative clock skew between the master radio transceiver and the plurality of slave radio transceivers into account, wherein the relative time offset and relative clock skew is determined based on the method according to the second aspect.

Effects and features of this third aspect are largely analogous to those described above in connection with the first and second aspects. Embodiments mentioned in relation to the third aspect are largely compatible with the first and second aspects.

The method facilitates determining localization of the movable radio signal transceiver, since distance measurements between the movable radio signal transceiver and respective radio signal transceivers may be combined without being affected or being minimally affected by relative time offset and relative clock skew of the radio signal transceivers.

The movable radio signal transceiver may transmit a signal, which may be received by a plurality of radio signal transceivers among the master radio signal transceiver and the slave radio signal transceivers. Thus, the movable radio signal transceiver need not necessarily transmit dedicated signals to each radio signal transceiver that is to perform a phase measurement.

The phase measurements need not necessarily be performed based on signals transmitted by the movable radio signal transceiver. According to an alternative, the movable radio signal transceiver may perform each phase measurements based on a signal received from the master radio signal transceiver and/or one of the slave radio signal transceivers.

Each of the master radio signal transceiver and the slave radio signal transceiver may be involved in determining distance information. Thus, ranging may be performed between the movable radio signal transceiver and each of the master radio signal transceiver and the slave radio signal transceivers, respectively. Alternatively, only a subset may be used and the master radio signal transceiver need not necessarily be involved in performing phase measurements. For instance, the phase measurements may be performed only by slave radio signal transceivers.

The signals transmitted by the movable radio signal transceiver or by the master radio transceiver and/or one of the slave radio transceivers may be formed by a local oscillator signal of the movable radio signal transceiver or a local oscillator signal of the master radio transceiver and/or one of the slave radio transceivers, respectively. For instance, the signals may be unmodulated signals.

The phase measurements may be performed by a receiving unit mixing the received signal with its local oscillator signal and determining a phase based on a mixed down signal. It should be realized that the phase measurements may be performed using in-phase (I) and quadrature (Q) components, hereinafter referred to as IQ measurements. Samples acquired by IQ measurements may be referred to as IQ samples.

According to an embodiment, the plurality of phase measurements is performed using one-way ranging.

Thanks to knowledge of the relative time offset and relative clock skew of the master radio signal transceiver in relation to each of the plurality of slave radio signal transceivers, one-way ranging may be performed between the movable radio signal transceiver and the master and slave radio signal transceivers. This may facilitate performing localization of the movable radio signal transceiver very quickly and with low power consumption. In particular, power consumption of the movable radio signal transceiver may be significantly reduced since the movable radio signal transceiver need not be involved in two-way ranging.

According to an embodiment, the received distance information is corrected based on relative time offset and relative clock skew such that the phase measurements of the plurality of phase measurements are related to a common time reference.

This implies that the corrected distance information may be immediately used in order to determine localization of the movable radio signal transceiver.

According to another embodiment, the method further comprises accessing information relating to relative time offset and relative clock skew for adjusting received distance information based on the relative time offset and the relative clock skew.

Thus, distance information may be provided to an entity having access to the information relating to relative time offset and relative clock skew. For instance, distance information may be received by the master radio signal transceiver, which may also have access to the relative time offset and relative clock skew. The distance information may thus be adjusted when determining localization of the movable radio signal transceiver.

According to a fourth aspect, there is provided a computer program product comprising computer-readable instructions such that when executed on a processing unit the computer program product will cause the processing unit to perform a method for estimating relative time offset and relative clock skew between a first radio transceiver and a second radio transceiver, said method comprising: receiving coarse information relating to the relative time offset and relative clock skew; determine a first weighted average phase difference value and a second weighted average phase difference value, wherein the first weighted average phase difference value and the second weighted average phase difference value are determined based on the first radio signal transceiver receiving signals at a first sequence of frequencies from the second radio transceiver and transmitting signals at a second sequence of frequencies to the second radio transceiver, wherein a switching of frequencies in the second sequence by the first radio transceiver is performed in synchronization with a switching of frequency in the first sequence by the second radio transceiver, wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values; and the first radio signal transceiver performing a phase measurement for each frequency of the first sequence of frequencies of the received signals; wherein the first weighted average phase difference value represents phase differences between sequential frequency values in the first sub-sequence and the second weighted average phase difference value represents phase differences between sequential frequency values in the second sub-sequence; receiving information relating to a third weighted average phase difference value between sequential frequency values in the third sub-sequence and a fourth weighted average phase difference value between sequential frequency values in the fourth sub-sequence based on phase measurements performed by the second radio transceiver for each frequency of the second sequence of frequencies; and determining a fine estimate of the relative time offset and relative clock skew based on the first, second, third, and fourth weighted average phase difference values.

Effects and features of this fourth aspect are largely analogous to those described above in connection with the first, second, and third aspects. Embodiments mentioned in relation to the fourth aspect are largely compatible with the first, second, and third aspects.

Thanks to the first sequence and the second sequence each including two sub-sequences having increasing frequency values and decreasing frequency values, respectively, the computer program product may avoid non-linear terms in determination of the relative time offset and relative clock skew of the first and second radio signal transceivers. This implies that the computer program product may be used for determining the fine estimate of the relative time offset and relative clock skew in a fast and resource efficient manner.

The computer program product may comprise a non-transient computer-readable medium for carrying the computer-readable instructions. Alternatively, the computer program product may comprise a signal carrying the computer-readable instructions, e.g., for communicating the computer program product to the processing unit through wired or wireless communication.

According to a fifth aspect, there is provided a system for estimating relative time offset and relative clock skew between a first radio transceiver and a second radio transceiver, said system comprising: a transceiver configured to: receive signals at a first sequence of frequencies from the second radio transceiver and transmit signals at a second sequence of frequencies to the second radio transceiver, wherein a switching of frequencies in the second sequence by the first radio transceiver is performed in synchronization with a switching of frequency in the first sequence by the second radio transceiver, wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values; perform a phase measurement for each frequency of the first sequence of frequencies of the received signals; and a processing unit configured to: receive coarse information relating to the relative time offset and relative clock skew; determine a first weighted average phase difference value between sequential frequency values in the first sub-sequence and a second weighted average phase difference value between sequential frequency values in the second sub-sequence; receive information relating to a third weighted average phase difference value between sequential frequency values in the third sub-sequence and a fourth weighted average phase difference value between sequential frequency values in the fourth sub-sequence based on phase measurements performed by the second radio transceiver for each frequency of the second sequence of frequencies; and determine a fine estimate of the relative time offset and relative clock skew based on the first, second, third, and fourth weighted average phase difference values.

Effects and features of this fifth aspect are largely analogous to those described above in connection with the first, second, third, and fourth aspects. Embodiments mentioned in relation to the fourth aspect are largely compatible with the first, second, third, and fourth aspects.

Thanks to the first sequence and the second sequence each including two sub-sequences having increasing frequency values and decreasing frequency values, respectively, the system may avoid non-linear terms in determination of the relative time offset and relative clock skew of the first and second radio signal transceivers. This implies that the system may be used for determining the fine estimate of the relative time offset and relative clock skew in a fast and resource efficient manner.

The system may in full be part of the first radio signal transceiver. The transceiver of the system may be the transceiver of the first radio signal transceiver. However, the processing unit of the system may alternatively be arranged externally to the first and second radio signal transceiver and may be configured to receive the information as input to the processing unit from the first radio signal transceiver and/or the second radio signal transceiver. The information from the radio signal transceivers may be jointly received by the processing unit. For instance, the second radio signal transceiver may send information relating to the third and fourth weighted average phase difference values to the first radio signal transceiver, which may forward the information to the processing unit.

The processing unit of the system may also be distributed between several physical entities. Thus, the processing unit of the system may be partly formed in the first radio signal transceiver, the second radio signal transceiver and/or an external unit.

The processing unit may be implemented as a general-purpose processing unit, such as a central processing unit (CPU), which may execute instructions of one or more computer programs in order to implement appropriate functionality. However, the processing unit may alternatively be implemented as firmware arranged, e.g., in an embedded system, or as a specifically designed processing unit, such as an Application-Specific Integrated Circuit (ASIC) or a Field-Programmable Gate Array (FPGA).

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of a system for localization of a movable radio signal transceiver.
Fig. 2 are schematic views illustrating communication between radio signal transceivers in the system of Fig. 1 for estimating relative time offset and relative clock skew.
Fig. 3 is a graph illustrating a relation between clocks based on relative time offset and relative clock skew.
Fig. 4a is a graph illustrating timing of signals transmitted by first and second radio signal transceivers for estimating relative time offset and relative clock skew.
Fig. 4b is a magnification of a part of the graph of Fig. 4a.
Fig. 5 is a graph illustrating frequencies and timing of clock signals for first and second radio signal transceivers in an ideal case.
Fig. 6 is a graph illustrating frequencies and timing of clock signals for first and second radio signal transceivers taking relative time offset and relative clock skew into account.
Fig. 7 is a flow chart of a method for estimating relative time offset and relative clock skew.
Fig. 8 is a schematic view of communication between radio signal transceivers in the system for coarse estimation of relative clock skew.
Fig. 9 is a chart illustrating timing of communication between fixed radio signal transceivers and movable radio signal transceivers in a system for localization of the movable radio signal transceiver.

Figs 10a-d are schematic views illustrating timing of communication between radio signal transceivers for estimating relative time offset and relative clock skew.

Fig. 11 is a flow chart of a method for localization of a movable radio signal transceiver.

Fig. 12 is a schematic view of a system for estimating relative time offset and relative clock skew between radio signal transceivers.

Detailed description

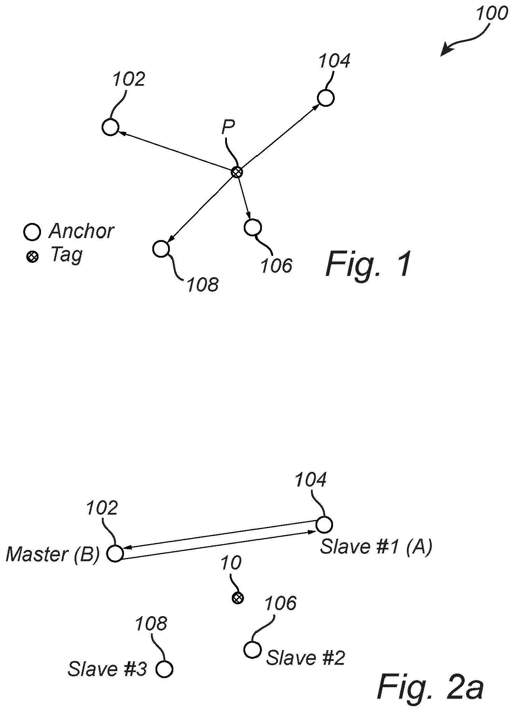

Referring now to Fig. 1, a system 100 for localization of a movable radio signal transceiver 10 will be described. The movable radio signal transceiver 10 may also be referred to herein as a tag. The system 100 comprises a plurality of radio signal transceivers 102, 104, 106, 108 having fixed and known locations. The radio signal transceivers 102, 104, 106, 108 may also be referred to as anchors. The system 100 may utilize determination of distances between the tag 10 and each of the anchors 102, 104, 106, 108. The system 100 is configured such that measurements performed relating the tag 10 to each of the anchors 102, 104, 106, 108 may be related to a common time reference. This enables transmitting of signals in one direction only between the tag 10 and the respective anchors 102, 104, 106, 108. However, in order for the measurements to be related to a common time reference, clocks of the anchors need to be synchronized.

As will be described in further detail herein, the present description provides synchronization such that the measurements relating the tag 10 to each of the anchors 102, 104, 106, 108 may be performed in relation to a common time reference. This facilitates use of signals transmitted in one direction only, when the tag 10 is to be localized.

The tag 10 and the anchors 102, 104, 106, 108 may be configured to communicate using Bluetooth® Low Energy (BLE). This implies that communication between the tag 10 and the anchors 102, 104, 106, 108 may be provided with low power consumption. However, it should be realized that the communication is not necessarily through BLE and other types of communication, including other frequencies, may be used.

The tag 10 may be referred to as device A and an anchor may be referred to as a device B. Transmitting of signals in one direction only for determining of a distance between devices A and B may be referred to as "one-way ranging" (1WR). In 1WR between devices A and B, device A will transmit only and device B will receive only, or vice versa. It may be assumed that device A has an unknown distance, i.e., it is mobile or movable. Device B is static with a known position to the system.

Both device A and device B may have a local oscillator (LO) generator. The LO generator may comprise a phased-lock loop (PLL) for generating a LO signal, which may also be referred to as a clock signal. Device A may be configured to simply transmit its LO signal, while device B will use its LO signal as a reference to mix down the signal received from device A. The mixed-down signal may after filtering be used to conduct a phase measurement, which may be utilized for determining a distance between devices A and B.

For 1WR, both devices should generate a so-called stepped frequency chirp in a phase-continuous manner as LO signal. The signal may thus comprise a plurality of frequencies and switching of frequencies may be provided in a phase-continuous manner. The phase measured at device B may be modelled as:

$$\phi_{AB}\big(t_{m,B}, \tau\big) = \phi_A - \phi_B - 2\pi f_A \tau + 2\pi \sum_{k=0}^{m-1} \Delta_f (\Delta_t - \tau)$$

where the frequency chirp comprises m different frequencies, $\phi_{AB}(t_{m,B}, \tau)$ denotes the phase measured at device B while device A was transmitting at a point in time $t_{m,B}$ at which the $m^{th}$ frequency is received, while propagation of the signal between device A and device B introduces a time delay $\tau$, where $\phi_A$ is a phase at device A, $\phi_B$ is a phase at device B, $f_A$ is the frequency transmitted by device A, $\Delta_f$ is a frequency difference between the LO signal of device B and the LO signal of device A, and $\Delta_t$ is a time offset between the device B and the device A.

A Multi-Carrier Phase Difference (MPCD) principle used in channel sounding (CS) between BLE devices may be applied directly on the measured phases at device B to determine a time-of-arrival (TOA) of the signal at device B. The TOA may thus represent a time of propagation of the signal between device A and device B, $T_{AB}$ and may be given by:

$$T_{AB} = \frac{-1}{2\pi\Delta_f(K_f - 1)} \sum_{m=0}^{K_f-2} \{\phi_{AB}(t_{m+1,B}, \tau) - \phi_{AB}(t_{m,B}, \tau) \, modulo \, 2\pi\} =$$

$$= (\tau - \Delta_t) \, modulo \, \frac{1}{\Delta_f},$$

where $K_f$ is a number of frequencies used in the frequency chirp. As apparent from the above, the TOA measured at device B is a sum of propagation delay and time offset are inherently mathematically inseparable.

When distances are to be determined in relation to a plurality of anchors 102, 104, 106, 108, a time-difference of arrival (TDOA) may be utilized. In using TDOA, a time relation between anchors 102, 104, 106, 108 may be known. Thus, there may be a common time offset between the tag 10 and each of the anchors 102, 104, 106, 108 or a relative time offset between the anchors 102, 104, 106, 108 may be known. Assuming that there is a common time offset between the tag 10 and each of the anchors 102, 104, 106, 108, a relationship between a position $x_A$ of the tag 10 and measured TOA at each anchor can be written as:

$$\begin{bmatrix} T_1 \\ T_2 \\ \vdots \\ T_{N_a} \end{bmatrix} = c_0^{-1} \begin{bmatrix} |x_A - x_{B_1}| \\ |x_A - x_{B_2}| \\ \vdots \\ |x_A - x_{B_{N_a}}| \end{bmatrix} + \Delta_t,$$

where $x_A$ is a vector describing the unknown position of the tag 10 (device A), $x_{B_i}$ is a vector describing the known position of the $i^{th}$ anchor, $N_a$ is the number of anchors 102, 104, 106, 108, $|x|$ denotes the Euclidean norm of $x$, $T_i$ denotes the measured TOA at the $i^{th}$ anchor and $c_0$ denotes speed of light. The set of non-linear equations defining relationship between a position $x_A$ of the tag 10 and measured TOA at each anchor 102, 104, 106, 108 comprises two unknowns, namely the position $x_A$ of the tag 10 and the time offset $\Delta_t$. One manner of solving the set of equations is to subtract one row, for instance the first row, from all other row, such that the set of equations becomes independent of $\Delta_t$. This corresponds to determining a difference in time of arrival, hence the name time-difference of arrival (TDOA). The set of equations thus become:

$$\begin{bmatrix} T_2 \\ \vdots \\ T_{N_a} \end{bmatrix} - T_1 = c_0^{-1} \begin{bmatrix} |x_A - x_{B_2}| \\ \vdots \\ |x_A - x_{B_{N_a}}| \end{bmatrix} - c_0^{-1}|x_A - x_{B_1}|.$$

Using two rows in the set of equations, a unique solution can be found. Using more rows will lead to an overdetermined set of equations such that a solution will be more robust against errors.

In a TDOA-based 1WR system, the anchors 102, 104, 106, 108 may measure TOA with respect to a common time reference by each anchor 102, 104, 106, 108 measuring a TOA of a signal from the tag 10 with respect to a local clock of the respective anchor 102, 104, 106, 108. The TOA measured with the local clock may be related to the common time reference. In order to do so, the time offset between the local clocks of the anchors 102, 104, 106, 108 needs to be known.

Synchronization of nodes in a system of radio signal transceivers is not unique. Rather, synchronization is commonly performed in radio systems. However, as the accuracy of determined time offsets has a direct impact on the localization accuracy in localizing a tag 10, the requirements of accurately determining time offsets are more stringent in the context of localization using 1WR compared to general use of synchronization. While for radio communication synchronization accuracy may need to be in the order of a symbol rate to ensure correct communication, in the context of localization any synchronization error will directly translate into a distance estimation error. In other words, a nanosecond synchronization error translates to a 30-centimetre distance estimation error.

Now, estimation of relative time offset and a relative clock skew between a first radio signal transceiver and a second radio signal transceiver will be described. The estimation provides a relative time offset that apply at a particular point in time. The estimation further provides a relative clock skew which defines how the relative time offset changes over time based on a difference of speed of clocks of the first radio signal transceiver and the second radio signal transceiver, respectively.

By determining the relative time offset and the relative clock skew, the time provided by the clocks of the first radio signal transceiver and the second radio signal transceiver may be related to each other such that the first and the second radio signal transceiver may be considered to be synchronized.

The synchronization method (method for estimating relative time offset and relative clock skew) described below may be performed by wireless communication. Thus, the first radio signal transceiver and the second radio signal transceiver may exchange signals through wireless communication for providing synchronization. This facilitates updating of the synchronization over time and also provides a freedom in installation of radio signal transceivers, since no wired communication between anchors is needed for providing synchronization. As used herein, synchronization between the first and the second radio signal transceiver implies that relative time offset and relative clock skew is estimated.

Referring now to Figs 2a-c, a scheme for wireless communication for synchronization is illustrated. As illustrated, one anchor may act as a master anchor 102 providing a common time reference to all of the anchors 102, 104, 106, 108 based on its clock. Hence, the clock of the master anchor 102 may be considered a clock master. The other anchors may act as slave anchors 104, 106, 108 and the clocks of the slave anchors 104, 106, 108 are to be synchronized with the clock of the master anchor 102 so that all of the anchors 102, 104, 106, 108 are related to the common time reference.

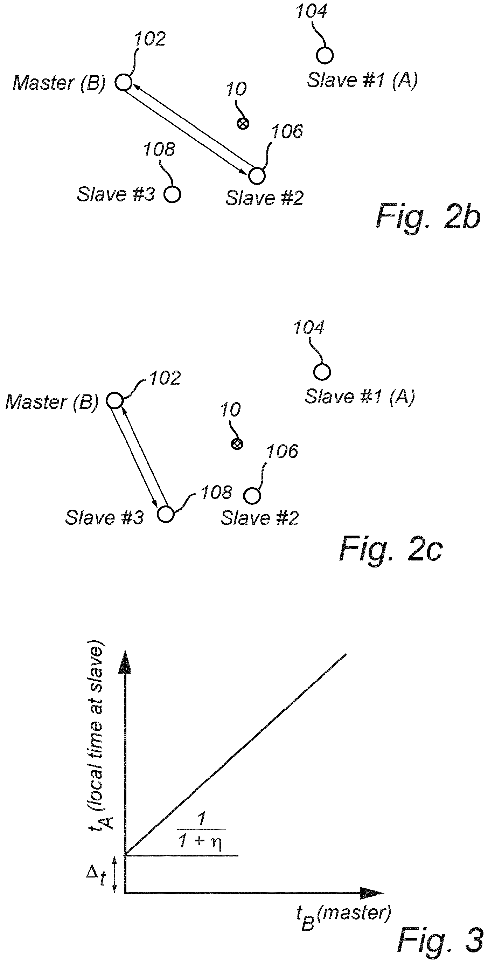

The master anchor 102 may be sequentially synchronized with each of the slave anchors 104, 106, 108. As illustrated in Figs 2a-c, the master anchor 102 may first communicate (Fig. 2a) with the first slave anchor 104 in order to provide synchronization with the first slave anchor 104. The master anchor 102 may then communicate (Fig. 2b) with the second slave anchor 106 in order to provide synchronization with the second slave anchor 106. The master anchor 102 may then communicate (Fig. 2c) with the third slave anchor 108 in order to provide synchronization with the third slave anchor 108.

The synchronization between the master anchor 102 and each of the slave anchors 104, 106, 108 may be performed in a same manner. Below, synchronization between the master anchor 102 and the first slave anchor 104 will be described and it should be realized that synchronization between the master anchor 102 and any other slave anchor 106, 108 may be performed in the same manner. The synchronization may be viewed as generally providing a synchronization between two radio signal transceivers, regardless whether the radio signal transceivers are part of a system of radio signal transceivers or not. Thus, the master anchor 102 may be viewed as a first radio signal transceiver and the first slave anchor 104 may be viewed as a second radio signal transceiver.

The master anchor 102 and the slave anchor 104 may first conduct a one-time handshake communication to initiate the synchronization. During the handshake communication, both the master anchor 102 and the slave anchor 104 may agree on settings to be used in communication in order to perform the synchronization. The settings may include a number of frequencies (which may also be referred to as tones) to be used, when frequencies are to be switched, when phase measurements are to be acquired, a size of frequency steps, when the respective anchors will be transmitting and receiving, and when to switch these roles.

Furthermore, the master anchor 102 and the slave anchor 104 may initially determine a coarse time synchronization, i.e., a coarse determination of the relative time offset and relative clock skew may be determined. It should be noted that the synchronization provided initially through the handshake and/or further communication between the master anchor 102 and the slave anchor 104 will be imperfect, in the sense that both the master anchor 102 and the slave anchor 104 use slightly different clock frequencies and that their initial timing will not be identical. A relation between the timing of the clock for the slave anchor 104 in relation to the clock for the master anchor 102 may be defined by the following clock model:

$$t_A = \frac{1}{1+\eta} t_B + \Delta_t,$$

where $t_A$ is local time at the slave anchor 104, $t_B$ is local time at the master anchor 102 providing a time reference, $\eta$ is relative clock skew defining relative speed of the clock of the slave anchor 104 compared to the speed of the clock of the master anchor 102, and $\Delta_t$ is an initial time offset of the clock of the slave anchor 104 with respect to the clock of the master anchor 102 at a time $t_B = 0$. The relative clock skew may alternatively be defined as $\frac{1}{1+\eta}$ .

The clock model relates the local time at slave anchor 104 to the common time reference, i.e., the clock master. It should be noted that this clock model can be used for any other slave anchors 106, 108 and the master anchor 102 to relate the local times of such slave anchors 106, 108 to the common time reference.

It should be noted that the values of $\eta$ and $\Delta_t$ will vary over time. Nevertheless, the values of $\eta$ and $\Delta_t$ can be

considered constant during an interval of $T_{update}$. Thus, the synchronization may be repeated at intervals of $T_{update}$ to update $\eta$ and $\Delta_t$. In other words, the local time at slave anchor 104 can be written as a piecewise linear function of the time at the master anchor 102. This is also illustrated in Fig. 3, which shows the local time at the slave anchor 104 as a function of the time at the master anchor 102 within a single update interval.

For the synchronization described herein, it is assumed that each anchor has a single crystal used for both generation of a clock signal and local oscillator (LO) signal. The LO signal will be used below for synchronization between anchors. The LO signal forms an unmodulated signal, in that there is no modulation based on information to be carried by a carrier wave of the LO signal. If an anchor does not have a single crystal for generation of the clock signal and the LO signal, such anchor may need to further synchronize the generation of the clock signal and the LO signal internally. When a single crystal is used, the master anchor 102 only needs to estimate two parameters for each slave, i.e., $\eta$ and $\Delta_t$.

The communication between the master anchor 102 and the slave anchor 104 for estimating the relative time offset and relative clock skew will now be described in further detail.

The master anchor 102 and the slave anchor 104 perform two-way communication in order to perform phase measurements that may be used for estimating the relative time offset and the relative clock skew. In order to do so, a coarse time synchronization may first be achieved such that the phase measurements may be performed at a relevant point in time. Thus, the coarse time synchronization may ensure that the master anchor 104 may perform phase measurements of a particular frequency at a time when the slave anchor 102 is actually transmitting the particular frequency. A method for coarse time synchronization will be explained in further detail below.

Furthermore, both the master anchor 102 and the slave anchor 104 have agreed on exchanging $2K_f$ number of frequencies. Thus, each of the master anchor 102 and the slave anchor 104 is configured to transmit signals at a number of different frequencies. The signal at a frequency may also be referred to as a tone. The master anchor 102 uses a starting frequency of $f_B$ of a first sequence of frequencies with frequency steps of $\Delta_B[k]$ between sequential tones. The frequency of tone $k$ denoted by $f_B[k]$ is then found by:

$$f_B[k] = f_B + \sum_{i=0}^{k} \Delta_B[i], \qquad \forall k \in \{0, 1, \ldots, 2K_f - 1\}.$$

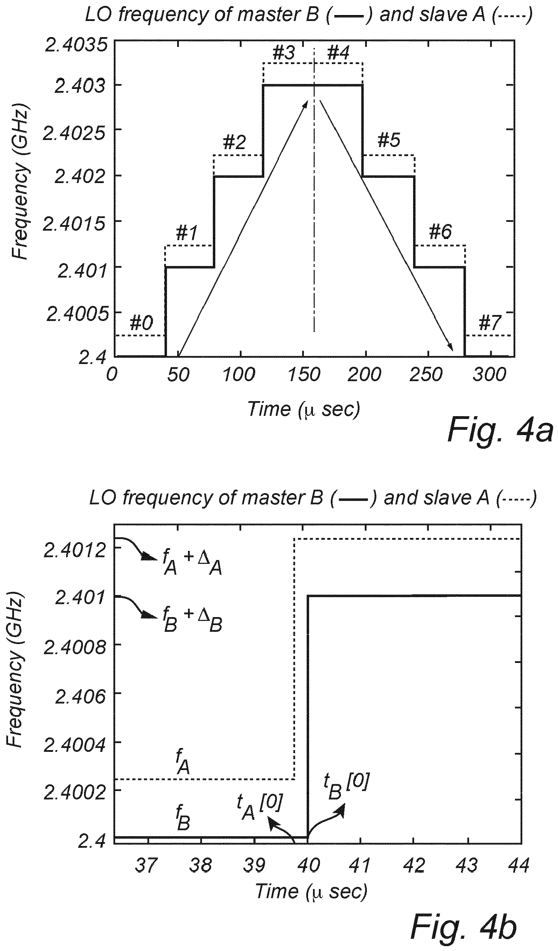

The master anchor 102 transmits signals at the first sequence of frequencies comprising a first sub-sequence of increasing frequency values and a second sub-sequence of decreasing frequency values. According to an embodiment, the first sub-sequence may be followed by the second sub-sequence. However, it should be realized that, alternatively, the second sub-sequence may be followed by the first sub-sequence. Using the first sub-sequence being followed by the second sub-sequence, the frequency steps of the master anchor 102 may define a so-called rooftop scheme for the signals at the first sequence of frequencies, as shown in Fig. 4a. The frequency steps $\Delta_B[k]$ may thus be defined as,

$$\Delta_B[k] = \Delta_B, \qquad k \in \{1, 2, \ldots, K_f - 1\},$$

$$\Delta_B[k] = -\Delta_B, \quad k \in \{K_f + 1, K_f + 2, \ldots, 2K_f - 1\}.$$

The slave anchor 104 may transmit signals at the same frequencies used by the master anchor 102. Ideally, the frequency at master anchor 104 is equal to the frequency at slave anchor 102 for all the tones. However, due to relative clock skew as described above, the frequency at the slave anchor 104 differs from the frequency at the master anchor 102 by a factor $(1 + \eta)$. In the following, the starting frequency of a second sequence of frequencies transmitted by the slave anchor 104 is denoted by $f_A$ and a relationship to the starting frequency $f_B$ of the first sequence is given by:

$$f_A = (1 + \eta)f_B.$$

Similarly, the frequency steps of the second sequence may be denoted by $\Delta_A[k]$ and a relationship to the frequency steps $\Delta_B[k]$ of the first sequence is given by:

$$\Delta_A[k] = (1 + \eta)\Delta_B[k].$$

With the choice $\Delta_B[k]$ as defined above, the first and second sequence of frequencies define a so-called rooftop scheme as shown in Fig. 4a. In Fig. 4a, the starting frequency of the first sequence is set to $f_B$ = 2.4 GHz and the frequency step of the first sequence is set to $\Delta_B$ = 1 MHz. Employing the rooftop scheme, the frequency is rising from tone 0 to tone $K_f$ - 1, and then, from tone $K_f$ to tone $2K_f$ - 1 the frequency is falling.

In addition, the master anchor 102 and the slave anchor 104 may agree to switch frequencies at time points $t_B[k]$ and at $t_A[k]$, respectively. Both the master anchor 102 and the slave anchor 104 may agree to switch frequencies in synchronization, such that the switching of frequencies should occur exactly at the same time. However, due to the relative clock skew and relative time offset, the following relationship holds between the time of switching the frequencies at the slave anchor 104 and the master anchor 102:

$$t_A[k] = \frac{t_B\lfloor k \rfloor}{1 + \eta} + \Delta_t.$$

In Fig. 4b, the LO frequencies of tone 0 and tone 1 over time for the master anchor 102 and the slave anchor 104 are illustrated, when $\eta$ = 100 ppm and $\Delta_t$ = -225 ns. Due to the relative clock skew, the frequencies of tone 0 and tone 1 at the master anchor 102 are not the same as those of the slave anchor 104. In fact, using the relationships defined above, the following relationship holds for the frequency of the $k^{th}$ tone at the slave anchor 104 as a function of frequency at the master anchor 102, i.e., $f_A[k] = (1 + \eta)f_B[k]$. In addition, the point in time at which the slave anchor 104 switches frequencies is different than the point in time at which the master anchor 102 switches frequencies due to the relative time offset and the relative clock skew, as defined above.

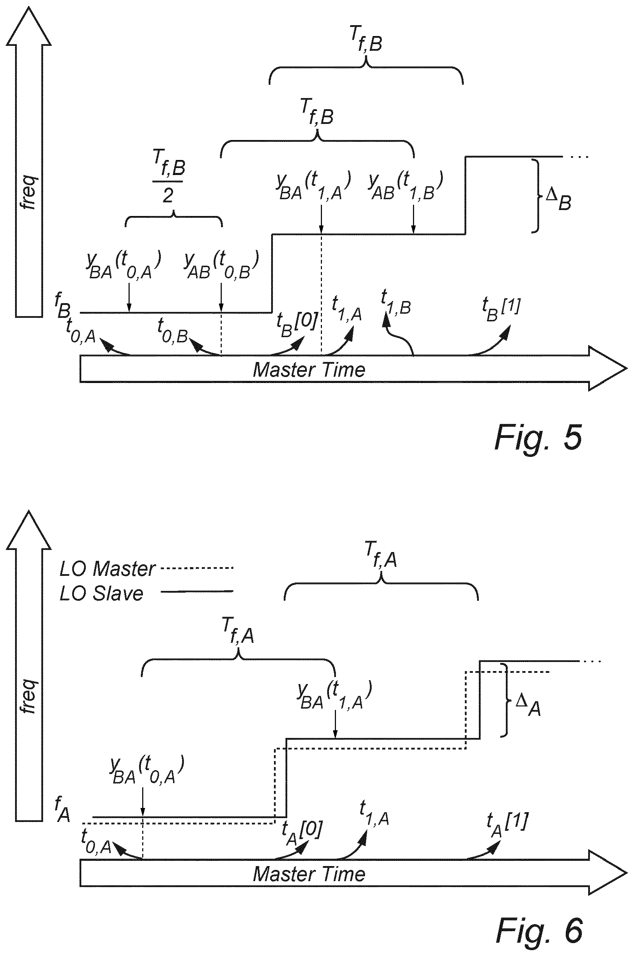

Referring now to Fig. 5, each tone has a duration of $T_{f,B} = t_B[k + 1] - t_B[k]$ at the master anchor 102. This duration is ideally, if $\eta$ = 0 and $\Delta_t$ = 0, equal to the duration of the tone $T_{f,A} = t_A[k + 1] - t_A[k]$ at the slave anchor 104. In presence of relative clock skew and relative time offset, and using the above equations, the relationship between $T_{f,B}$ and $T_{f,A}$ may be defined as:

$$T_{f,A} = \frac{T_{f.B}}{1 + \eta}.$$

The tone duration should allow for a time reserved for both frequency switching and phase measurement in a half-duplex mode. Thus, during the tone duration, the master anchor 102 should transmit a signal at its current LO frequency while the slave anchor 104 receives the signal and performs a phase measurement. In addition, during the tone duration, the slave anchor 104 should transmit a signal at its current LO frequency while the master anchor 102 receives the signal and performs a phase measurement.

The phase measurements may be performed by a receiving unit mixing the received signal with its local oscillator signal and determining a phase based on a mixed down signal. It should be realized that the phase measurements may be performed using in-phase (I) and quadrature (Q) components, hereinafter referred to as IQ measurements. Samples acquired by IQ measurements may be referred to as IQ samples.

During exchange of $m^{th}$ tone, the measured IQ sample at the slave anchor 104 at time $t_{m,A}$ is denoted by $y_{BA}(t_{m,A})$, whereas the measured IQ sample at the master anchor 102 at time $t_{m,B}$ is denoted by $y_{AB}(t_{m,B})$. In the illustrated scheme, both the master anchor 102 and the slave anchor 104 have agreed that during exchange of each tone, first the master anchor 102 is in transmitting mode, and the slave anchor 104 is in receiving mode, where the slave anchor 104 acquires an IQ sample. Then, the master anchor 102 and the slave anchor 104 switch roles, such that the slave anchor 104 is in the transmitting mode and the master anchor 102 is in the receiving mode, where the master anchor 102 acquires an IQ sample. In the ideal case with no relative clock skew ($\eta$ = 0) and no relative time offset ($\Delta_t$ = 0), the time difference between $t_{m,B}$ and $t_{m,A}$ equals to half of the tone duration, i.e., $T_{f,B}/2$. Otherwise, the following relationship holds between $t_{m,A}$ and $t_{m,B}$:

$$t_{m,A} = \frac{t_{m,B} - \dfrac{T_{f,B}}{2}}{1 + \eta} + \Delta_t.$$

All the above assumptions are illustrated in Fig. 5 for the ideal case where $\eta$ = 0 and $\Delta_t$ = 0, which means $f_A[k]$ = $f_B[k]$, $t_A[k] = t_B[k]$, $T_{f,A} = T_{f,B}$, and $t_{m,A} = t_{m,B} - T_{f,B}/2$. In presence of relative clock-skew of $\eta$ and relative time-offset of $\Delta_t$, the LO of the slave anchor 104 deviates from the LO of the master anchor 102, which is illustrated in Fig. 6.

Now, estimation of the relative clock skew and the relative time offset will be further described. The relative clock skew and the relative time offset may be estimated from the phase samples (IQ samples) acquired using the scheme described above. Further, the method may utilize coarse estimates of the relative clock skew, $\eta_{coarse}$ and relative time offset $\Delta_{t,coarse}$. One manner of determining coarse estimates will be described below.

For convenience, the derivations are conducted in the phase domain assuming a pure line-of-sight scenario. This implies that signals may propagate along a line of sight between the master anchor 102 and the slave anchor 104. In particular, the signals are not undergoing reflections that may cause propagating along a plurality of paths (multipath). However, it should be realized that relative clock skew and relative time offset may alternatively be determined in relation to signals in a multipath scenario.

To compute the clock-skew and time-offset, two intermediate variables, namely $\kappa_1$ and $\kappa_2$, are used. Both intermediate variables relate to average phase difference of the samples taken at both the master anchor 102 and the slave anchor 104. The difference between the intermediate variables is that for the computation of the first intermediate variable $\kappa_1$, samples of the rising side of the rooftop scheme shown in Fig. 4a are used, while for the computation of the second intermediate variable $\kappa_2$, the samples taken of the falling side of the rooftop scheme are used. To understand the relationship between the intermediate variables and the relative clock skew and the relative time offset, first the measured phase sample for $m^{th}$ tone at the master anchor 102 denoted by $\phi_{AB}(t_{m,B}, \tau)$, when the slave anchor 104 is transmitting, is found and given by:

$$\phi_{AB}(t_{m,B}, \tau) = \phi_A - \phi_B + 2\pi(f_A - f_B)t_{m,B} - 2\pi f_A \tau + \\ 2\pi \sum_{k=0}^{m-1} (\Delta_A[k] - \Delta_B[k])t_{m,B} + \Delta_B t_B[k] - \Delta_A(t_A[k] + \tau),$$

where a propagation channel between the master anchor 102 and the slave anchor 104 introduces a delay $\tau$ (for a pure line-of-sight channel). Using relationships defined above, the measured phase sample for $m^{th}$ tone at the master anchor 102 may be defined as:

$$\phi_{AB}(t_{m,B}, \tau) = \phi_A - \phi_B + 2\pi f_B(-\tau + \eta t_{m,B} - \eta\tau) + \\ 2\pi \sum_{k=0}^{m-1} \Delta_B[k] \left( \eta t_{m,B} - (1 + \eta)(\tau + \Delta_t) \right).$$

Then, the phase difference between two consecutive samples may be computed as:

$$\phi_{AB}(t_{m+1,B}, \tau) - \phi_{AB}(t_{m,B}, \tau) = \\ = 2\pi f_B \eta T_{f,B} + 2\pi \Delta_B \left( \eta t_{m+1,B} - (1 + \eta)(\tau + \Delta_t) \right) + 2\pi m \Delta_B \eta T_{f,B}.$$

Using this phase difference, a first average phase difference value between sequential frequency values in the first sub-sequence over tone 0 to tone $K_f$ - 1 (when the frequency is rising) transmitted by the slave anchor 104 and received by the master anchor 102 may be determined as:

$$\overline{\Delta\phi_{AB,rising}} = \frac{1}{K_f - 1} \sum_{m=0}^{K_f-2} \phi_{AB}(t_{m+1,B}, \tau) - \phi_{AB}(t_{m,B}, \tau) = \\ = 2\pi \left( \eta \left( \left( \frac{f_B}{\Delta_B} + K_f - 1 \right) T_{f,B} + t_{0,B} - \Delta_t - \tau \right) - (\Delta_t + \tau) \right).$$

Similarly, when the master anchor 102 is transmitting, the measured phase sample for $m^{th}$ tone at the slave anchor 104 may be defined as:

$$\phi_{BA}(t_{m,A}, \tau) = \phi_B - \phi_A + 2\pi f_B(-\tau - \eta t_{m,A}) + \\ 2\pi \sum_{k=0}^{m-1} \Delta_B[k](-\eta t_{m,A} - \tau + (1+\eta)\Delta_t).$$

Then, the phase difference between two consecutive samples may be computed as:

$$\phi_{BA}(t_{m+1,A}, \tau) - \phi_{BA}(t_{m,A}, \tau) = \\ = -2\pi f_B \eta T_{f,A} + 2\pi \Delta_B(-\eta t_{m+1,A} - \tau + (1+\eta)\Delta_t) + 2\pi m \Delta_B \eta T_{f,A}.$$

Using this phase difference, a third average phase difference value between sequential frequency values in the third sub-sequence over tone 0 to tone $K_f$ - 1 (when the frequency is rising) transmitted by the master anchor 102 and received by the slave anchor 104 may be determined as:

$$\overline{\Delta\phi_{BA,rising}} = \frac{1}{K_f - 1} \sum_{m=0}^{K_f-2} \phi_{BA}(t_{m+1,A}, \tau) - \phi_{AB}(t_{m,A}, \tau) = \\ = 2\pi\Delta_B\left(\eta\left(-\left(\frac{f_B}{\Delta_B} + K_f - 1\right)T_{f,A} - t_{0,A} + \Delta_t\right) - (-\Delta_t + \tau)\right).$$

Using the first and third average phase difference values, the first intermediate variable $\kappa_1$ may be determined as follows:

$$\kappa_1 = \frac{1}{4\pi\Delta_B}\left(\overline{\Delta\phi_{AB,rising}} - \overline{\Delta\phi_{BA,rising}}\right),$$

which may be further written as:

$$\kappa_1 = \left(\frac{(T_{f,B} + T_{f,A})}{2}\left(\frac{f_B}{\Delta_B} + K_f - 1\right) + \frac{t_{0,B} + t_{0,A}}{2} - \frac{\tau}{2} - \Delta_t\right)\eta - \Delta_t.$$

Similarly, a second average phase difference value between sequential frequency values in the second sub-sequence over tone $K_f$ to tone $2K_f$ - 1 (when the frequency is falling) transmitted by the slave anchor 104 and received by the master anchor 102 may be determined, denoted by $\Delta\phi_{AB,falling}$ and a fourth average phase difference value between sequential frequency values in the fourth sub-sequence over tone $K_f$ to tone $2K_f$ - 1 (when the frequency is falling) transmitted by the master anchor 102 and received by the slave anchor 104 may be determined, denoted by $\Delta\phi_{BA,falling}$.

Using the second and fourth average phase difference values, the second intermediate variable $\kappa_2$ may be determined as follows:

$$\kappa_2 = \frac{1}{4\pi\Delta_B}\left(\overline{\Delta\phi_{AB,falling}} - \overline{\Delta\phi_{BA,falling}}\right) = \\ = \left(\frac{(T_{f,A} + T_{f,B})}{2}\left(\frac{f_B}{\Delta_B} - K_f\right) - \frac{(t_{0,A} + t_{0,B})}{2} + \frac{\tau}{2} + \Delta_t\right)\eta + \Delta_t.$$

The first and second average phase difference values may for instance be determined by the master anchor 102, which is configured to perform the phase measurements for determining the first and second average phase difference values. Similarly, the third and fourth average phase difference values may for instance be determined by the slave anchor 104, which is configured to perform the phase measurements for determining the third and fourth phase average difference values. Phase average difference values may then be transmitted such that all phase average difference values are available at one entity, which may then determine the first and second intermediate variables. For instance, the slave anchor 104 may transmit the third and fourth phase average difference values to the master anchor 102 such that the intermediate variables may be determined by the master anchor 102. However, it should be realized that the intermediate variables may be determined by another entity, which may receive information relating to the phase measurements from the master anchor 102 and the slave anchor 104, respectively.

The intermediate variables may be used to define a set of equations related to parameters of interest, namely $\eta$ and $\Delta_t$, such that the relative clock skew and relative time offset may be determined. The set of equations may be expressed as:

$$\begin{cases} \kappa_1 = \left( \frac{(T_{f,A} + T_{f,B})}{2} \left( \frac{f_B}{\Delta_B} + K_f - 1 \right) + \frac{(t_{0,B} + t_{0,A})}{2} - \frac{\tau}{2} - \Delta_t \right) \eta - \Delta_t \\ \kappa_2 = \left( \frac{(T_{f,A} + T_{f,B})}{2} \left( \frac{f_B}{\Delta_B} - K_f \right) - \frac{(t_{0,A} + t_{0,B})}{2} + \frac{\tau}{2} + \Delta_t \right) \eta + \Delta_t \end{cases}$$

The above set of equations has a nonlinear term, namely $\Delta_t \eta$. However, by adding the two equations of the set, the nonlinear terms and terms associated with $\Delta_t$ will cancel out, yielding the following expression:

$$\kappa_1 + \kappa_2 + i_\eta D_t = \left( (T_{f,B} + T_{f,A}) \left( \frac{f_B}{\Delta_B} - \frac{1}{2} \right) \right) \eta, \quad i_\eta \in \mathbb{Z}$$

where the term $i_\eta$ is an unknown integer, $D_t$ is defined as $D_t = 1/2\Delta_B$, and the term $i_\eta D_t$ takes a $2\pi$ ambiguity of phase difference into account.

The unknown integer value $i_\eta$ may be determined using knowledge of the coarse information relating to the relative clock skew. The coarse information may define a value of $\eta_{coarse}$ that may be used for determining the integer value $i_\eta$ based on the equation above. The integer value $i_\eta$ may thus be given by:

$$i_\eta = round \left( \frac{(T_{f,B} + T_{f,A}) \left( \frac{f_B}{\Delta_B} - \frac{1}{2} \right) \eta_{coarse} - (\kappa_1 + \kappa_2)}{D_t} \right),$$

where $round(\cdot)$ is a function that outputs a nearest integer to its input.

It may be seen that when the value of $i_\eta$ is known, it is possible to determine a fine estimate of the parameter $\eta$ by solving a quadratic function from the expression based on the intermediate values above. Thus, the following quadratic function may be defined:

$$\eta^2 + (2 - W)\eta - W = 0,$$

where

$$W = \frac{\kappa_1 + \kappa_2 + i_\eta D_t}{T_{f,B} \left( \frac{f_B}{\Delta_B} - \frac{1}{2} \right)}.$$

Based on this the fine estimate of the parameter $\eta$ may be determined as:

$$\eta = -1 + \frac{W}{2} + \frac{\sqrt{W^2 + 4}}{2}.$$

It should be noted that in the solution to the quadratic equation provided above, the root with $|\eta| \ll 1$ has been chosen, since it may be known a priori that $|\eta|$ is at most 100 ppm.

The fine estimate of the parameter $\eta$ may be used directly as a fine estimate of the relative clock skew. However, the fine estimate of the parameter $\eta$ may alternatively be used to determine the fine estimate of the relative clock skew, for instance, if the relative clock skew is defined as $1/(1 + \eta)$.

It should be noted that $\eta_{coarse}$ is not exactly accurate and, hence, the determination of $i_\eta$ may also be inaccurate. However, it may be guaranteed that the determination of $i_\eta$ is correct, as long as an estimation error for coarse estimation of $\eta_{coarse}$ given by $e_{\eta_{coarse}} = \eta_{coarse} - \eta$ is within the following interval:

$$-\frac{D_t}{2\beta} \le e_{\eta_{coarse}} \le \frac{D_t}{2\beta},$$

where

$$\beta = \left( (T_{f,B} + T_{f,A}) \left( \frac{f_B}{\Delta_B} - \frac{1}{2} \right) \right).$$

In addition, once the fine estimate of the parameter $\eta$ relating to the relative clock skew has been determined, the parameter $\Delta_t$ may also be determined based on any of the equations in the set of equations formed by the intermediate variables $\kappa_1$ and $\kappa_2$ above. For instance, the parameter $\Delta_t$ may be determined by the following equation:

$$\Delta_t \left( 1 + \frac{\eta}{2} \right) = \kappa_2 + i_t D_t - \alpha\eta, \quad i_t \in \mathbb{Z},$$

where

$$\alpha = \left( \frac{(T_{f,A} + T_{f,B})}{2} \left( \frac{f_B}{\Delta_B} - K_f \right) + \frac{T_{f,B}}{4(1 + \eta)} - \frac{t_{0,B}}{2} \left( 1 + \frac{1}{1 + \eta} \right) \right),$$

and the term $i_t$ is an unknown integer, and the term $i_t D_t$ takes a $2\pi$ ambiguity of phase difference into account.

Similar to the above, the unknown integer value $i_t$ may be determined using knowledge of the coarse information relating to the relative time offset. The coarse information may define a value of $\Delta_{t,coarse}$ that may be used for determining the integer value $i_t$ based on the equation above. The integer value $i_t$ may thus be given by:

$$i_t = round\left( \frac{\Delta_{t,coarse}\left( 1 + \frac{\eta}{2} \right) - \kappa_2 + \alpha\eta}{D_t} \right).$$

Once the integer value $i_t$ is known, the fine estimate of the parameter $\Delta_t$ may be determined as:

$$\Delta_t = \frac{\kappa_2 + i_t D_t - \alpha\eta}{1 + \frac{\eta}{2}}.$$

The fine estimate of the parameter $\Delta_t$ may be used directly as a fine estimate of the relative time offset. However, the fine estimate of the parameter $\Delta_t$ may alternatively be used to determine the fine estimate of the relative time offset, for instance, if the relative time offset is defined as a function of the parameter $\Delta_t$.

It should be noted that $\Delta_{t,coarse}$ is not exactly accurate and, hence, the determination of $i_t$ may also be inaccurate. However, it may be guaranteed that the determination of $i_t$ is correct, as long as an estimation error for coarse estimation of $\Delta_{t,coarse}$ given by $e_{\Delta_{t,coarse}} = \Delta_{t,coarse} - \Delta_t$ is within the following interval:

$$-\frac{D_t}{2(1+\eta)} \leq e_{\Delta_{t,coarse}} \leq \frac{D_t}{2(1+\eta)}.$$

Thus, based on the above, requirements are set on the coarse estimation of the parameters $\eta$ and $\Delta_t$. Thus, coarse information relating to the relative time offset and relative clock skew should be determined with sufficient accuracy as defined above in order to allow the fine estimates of the parameters $\eta$ and $\Delta_t$ to be correctly determined.

As an example, when $\Delta_B$ = 1 MHz, $T_{f,B}$ = 40 $\mu$s, $\eta$ = 100 ppm, and $f_B$ = 2.4 GHz, the coarse estimation of parameters $\eta$ and $\Delta_t$ should be made with an accuracy corresponding to $|e_{\eta coarse}| \leq$ 1.30 ppm, and $|e_{\Delta_{t,coarse}}| \leq$ 249.97 ns. Any manner of determining the coarse estimation with such accuracy may be used for providing initial, coarse determination of the parameters $\eta$ and $\Delta_t$.

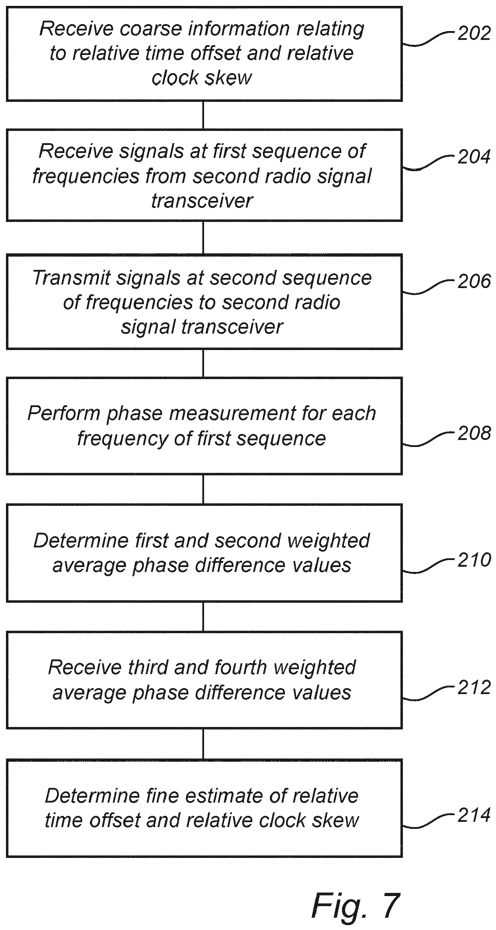

Referring to Fig. 7, the method for estimating relative time offset and relative clock skew between a first radio signal transceiver, e.g., the master anchor 102, and a second radio signal transceiver, e.g., the slave anchor 104, as described in detail above will now be summarized.

The determination of a fine estimate of the relative time offset and the relative clock skew may be performed by any entity, which may be the first radio signal transceiver or the second radio signal transceiver, or another entity that receives information from the first radio signal transceiver and the second radio signal transceiver.

The method comprises receiving 202 coarse information relating to the relative time offset and relative clock skew. The method may comprise receiving actual values for the relative time offset and relative clock skew or receiving information that may be used for determining the actual values of the relative time offset and relative clock skew.

The method further comprises exchanging of tones between the first radio signal transceiver and the second radio signal transceiver. Thus, from a perspective of the first radio signal transceiver, the method comprises receiving 204, by the first radio signal transceiver, signals at a first sequence of frequencies from the second radio transceiver. The method further comprises transmitting 206, by the first radio signal transceiver, signals at a second sequence of frequencies to the second radio signal transceiver allowing the second radio signal transceiver to receive the signals at the second sequence of frequencies.

The exchanging of signals (tones) may be performed such that a switching of frequencies in the second sequence by the first radio signal transceiver is performed in synchronization with a switching of frequency in the first sequence by the second radio signal transceiver, wherein switching of frequencies is performed by coherent frequency switching. Further, the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values.

The method further comprises performing 208, by the first radio signal transceiver, a phase measurement for each frequency of the first sequence of frequencies of the received signals. In addition, the transmitting of the signals at a second sequence of frequencies to the second radio signal transceiver allows the second radio signal transceiver to perform a phase measurement for each frequency of the second sequence of frequencies of the received signals.

Based on the phase measurements performed by the first radio signal transceiver and the second radio signal transceiver, weighted average phase difference values may be determined. The weighted average phase difference values may be determined in the first radio signal transceiver and the second radio signal transceiver, respectively, based on the phase measurements performed in the respective radio signal transceivers. However, it should be realized that the weighted average phase difference values may alternatively be determined in different entities or in a common entity that receives information of the phase measurements from each of the first and the second radio signal transceiver.

The method may thus comprise determining 210 a first weighted average phase difference value between sequential frequency values in the first sub-sequence and a second weighted average phase difference value between sequential frequency values in the second sub-sequence based on phase measurements performed by the first radio signal transceiver. The method may further comprise receiving 212 information relating to a third weighted average phase difference value between sequential frequency values in the third sub-sequence and a fourth weighted average phase difference value between sequential frequency values in the fourth sub-sequence based on phase measurements performed by the second radio signal transceiver.

The first and the second weighted average phase difference values may be determined as:

$$\overline{\Delta\phi_{AB,rising}} = \frac{1}{K_f - 1} \sum_{m=0}^{K_f-2} \phi_{AB}\big(t_{m+1,B}, \tau\big) - \phi_{AB}\big(t_{m,B}, \tau\big),$$

$$\overline{\Delta\phi_{AB,falling}} = \frac{1}{K_f - 1} \sum_{m=K_f}^{2K_f-2} \phi_{AB}\big(t_{m+1,B}, \tau\big) - \phi_{AB}\big(t_{m,B}, \tau\big).$$

The third and fourth weighted average phase difference values may be determined as:

$$\overline{\Delta\phi_{BA,rising}} = \frac{1}{K_f - 1} \sum_{m=0}^{K_f-2} \phi_{BA}\big(t_{m+1,A}, \tau\big) - \phi_{AB}\big(t_{m,A}, \tau\big),$$

$$\overline{\Delta\phi_{BA,falling}} = \frac{1}{K_f - 1} \sum_{m=K_f}^{2K_f-2} \phi_{BA}\big(t_{m+1,A}, \tau\big) - \phi_{AB}\big(t_{m,A}, \tau\big).$$

The method further comprises determining 214 a fine estimate of the relative time offset and relative clock skew based on the first, second, third, and fourth weighted average phase difference values.

The determining of the fine estimate of the relative time offset and relative clock skew may include determining intermediate variables $\kappa_1$ and $\kappa_2$ as:

$$\kappa_1 = \frac{1}{4\pi\Delta_B}\big(\overline{\Delta\phi_{AB,rising}} - \overline{\Delta\phi_{BA,rising}}\big),$$

$$\kappa_2 = \frac{1}{4\pi\Delta_B}\big(\overline{\Delta\phi_{AB,falling}} - \overline{\Delta\phi_{BA,falling}}\big).$$

Then, the parameter $\eta$ may be estimated as:

$$\eta = -1 + \frac{W}{2} + \frac{\sqrt{W^2 + 4}}{2}$$

wherein

$$W = \frac{\kappa_1 + \kappa_2 + i_\eta D_t}{T_{f,B}\left(\frac{f_B}{\Delta_B} - \frac{1}{2}\right)},$$

$$D_t = \frac{1}{2\Delta_B},$$

and

$$i_\eta = round\left(\frac{(T_{f,B} + T_{f,A})\left(\frac{f_B}{\Delta_B} - \frac{1}{2}\right)\eta_{coarse} - (\kappa_1 + \kappa_2)}{D_t}\right).$$

In addition, the parameter $\Delta_t$ may be estimated as:

$$\Delta_t = \frac{\kappa_2 + i_t D_t - \alpha\eta}{1 + \frac{\eta}{2}},$$

wherein

$$i_t = round\left(\frac{\Delta_{t,coarse}\left(1 + \frac{\eta}{2}\right) - \kappa_2 + \alpha\eta}{D_t}\right),$$

and

$$\alpha = \left(\frac{(T_{f,A} + T_{f,B})}{2}\left(\frac{f_B}{\Delta_B} - K_f\right) + \frac{T_{f,B}}{4(1 + \eta)} - \frac{t_{0,B}}{2}\left(1 + \frac{1}{1 + \eta}\right)\right).$$

The parameters $\eta$ and $\Delta_t$ may be used directly as fine estimates of the relative clock skew and the relative time offset, respectively. Alternatively, parameters $\eta$ and $\Delta_t$ may be used for determining the relative clock skew and the relative time offset as a function of the parameters $\eta$ and $\Delta_t$, respectively.

The fine estimate of the parameters may be determined with an accuracy such that at any given point in time, the relative time offset between the slave anchor 104 and the master anchor 102 may be known with an accuracy better than 1 ns, which translates to a maximum 30 centimeter distance estimation error. The relative time offset at any given point in time may be defined by an initial relative time offset and a change of such initial relative time offset based on the relative clock skew.

Coarse estimation of the relative time offset may for instance be performed using timestamping. The master anchor 102 and the slave anchor 104 may exchange tones and/or packets. Time of transmitting and receiving a tone and/or packet may be recorded by the master anchor 102 and slave anchor 104 providing a time stamp. This may be used for estimating a relative time offset as is known in two-way ranging.

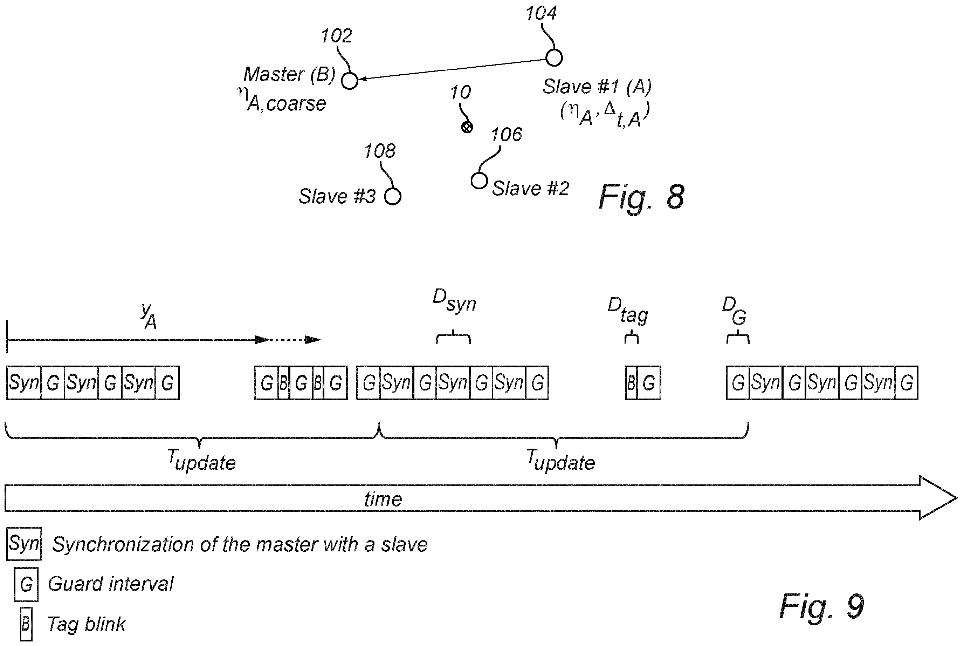

Referring now to Fig. 8, a method for coarse estimation of relative clock skew will be described. It should be realized that coarse estimation may be done in many other manners, such as by timestamping.

In the method described below with reference to Fig. 8, phase measurements for estimation of carrier frequency offset (CFO) and coarse estimation of relative clock skew.

As illustrated in Fig. 8, the method involves that the master anchor 102 and the slave anchor 104 conduct one-way frequency-coherent phase-based measurements. The master anchor 102 and the slave anchor 104 may initially agree, e.g., during a handshake, that only the slave anchor 104 is transmitting a certain tone, i.e., a signal at one particular frequency, $f_A$ and the master anchor 102 is taking $L$ samples with a sampling rate of $T_B$.

The $m^{th}$ phase sample acquired by the master anchor 102 may be defined as:

$$\phi_{AB}(t_{m,B}, \tau) = \phi_A - \phi_B + 2\pi f_B(-\tau + \eta t_{m,B} - \eta\pi),$$

and a phase difference between two consecutive samples may be given as:

$$\phi_{AB}(t_{m+1,B}, \tau) - \phi_{AB}(t_{m,B}, \tau) = 2\pi f_B \eta(t_{m+1,B} - t_{m,B}).$$

The sampling period of the master anchor 102 is $T_B = t_{m+1,B} - t_{m,B}$. The CFO may then be determined based on an average phase difference over $L$ samples, and may be defined as:

$$CFO = f_B \eta_{coarse} = \frac{1}{2\pi T_B} \left( \frac{1}{L-1} \sum_{l=0}^{L-2} \phi_{AB}(t_{l+1}, \tau) - \phi_{AB}(t_l, \tau) \right) =$$

$$= \frac{\phi_{AB}(t_{L-1}, \tau) - \phi_{AB}(t_0, \tau)}{2\pi(L-1)T_B}.$$

Based on the above, the coarse estimate for the parameter $\eta$ may be determined by:

$$\eta_{coarse} = \frac{1}{f_B} \left( \frac{\phi_{AB}(t_{L-1}, \tau) - \phi_{AB}(t_0, \tau)}{2\pi(L-1)T_B} \right).$$

It should be noted that the phase difference has an ambiguity of $2\pi$ and, therefore, $\eta_{coarse}$ has an ambiguity given by:

$$\frac{2\pi}{2\pi f_B T_B} = \frac{1}{f_B T_B}.$$

This implies that the coarse estimate of the parameter may be determined within an interval defined as:

$$-\frac{1}{2f_B T_B} \leq \eta_{coarse} \leq \frac{1}{2f_B T_B}$$

In order to enable choosing the correct root when determining the fine estimate of the parameter $\eta$ as discussed above, it may be advantageous to determine the coarse estimate $\eta_{coarse}$ with an accuracy of 100 ppm. The sampling period at the master anchor 102 may be controlled to achieve such accuracy based on setting $|\eta_{coarse}| \leq 100$ ppm in the equation above such that the following relation is given:

$$\frac{1}{2f_B T_B} \geq 100 \, ppm,$$

which may be used to find an expression of the sampling period $T_B$ as:

$$T_B \leq \frac{1}{f_B \times 200 \, ppm}.$$

For instance, using $f_B = 2.4$ GHz, the sampling period $T_B$ for coarse estimation of the parameter $\eta$ should be less than 2.08 μs, i.e., $T_B \leq 2.08$ μs.

It should be noted that by increasing the product of $T_B(L - 1)$, a better coarse estimate can be found for the relative clock-skew as the noise would be more averaged out. Besides, the slave anchor 104 and the master anchor 102 can use multiple tones instead of only one, to estimate the CFO, and consequently, $\eta_{coarse}$. In this way, the determination of the coarse estimate of the relative clock skew may benefit from diversity, by using multiple tones to find $\eta_{coarse}$.

When the coarse determination of relative clock skew is made, the master anchor 102 and/or the slave anchor 104 may be configured to tune a clock oscillator (crystal) based on the coarse information of the relative clock skew. It may be advantageous for the clock oscillator of the slave anchor 104 to be tuned, since the clock oscillators of all of the slave anchors 104, 106, 108 may then be tuned in relation to a common reference provided by the master anchor 102.

In such case, the slave anchor 104 may provide CFO estimation in a similar manner as described above for the master anchor 102. Thus, the slave anchor may estimate CFO as:

$$CFO = f_A \eta'_{coarse} = \frac{1}{2\pi T_A} \left( \frac{1}{L-1} \sum_{l=0}^{L-2} \phi_{BA}(t_{l+1}, \tau) - \phi_{BA}(t_l, \tau) \right) =$$
$$= \frac{\phi_{BA}(t_{L-1}, \tau) - \phi_{BA}(t_0, \tau)}{2\pi(L-1)T_A}.$$

Then, the slave anchor may tune the crystal to set the clock skew to $\eta'_{coarse}$. The relative clock skew between the master anchor 102 and the slave anchor 104 may then be reduced to be defined as:

$$\eta = \eta' - \eta'_{coarse},$$

where $\eta'$ denotes the relative clock skew before tuning of the crystal.

Instead of tuning a crystal of the master anchor 102 or the slave anchor 104, e.g., when no tunable crystal is available, the master anchor 102 or the slave anchor 104 may be configured to use digital signal processing or manipulate phase and/or frequency of the LO signal based on the coarse information of relative clock skew to compensate for the relative clock skew. Thus, the relative clock skew may again become

$$\eta = \eta' - \eta'_{coarse},$$

where $\eta'$ denotes the relative clock skew before manipulation of the LO signal.

Referring now to Fig. 9, transmission of signals for synchronization of the anchors 102, 104, 106, 108 and further transmission of signals for localization of a movable tag 10 will be described.

The master anchor 102 may perform synchronization procedures with each of the slave anchors 104, 106, 108 at regular time intervals $T_{update}$. Thus, estimation of the relative time offset and the relative clock skew between the master anchor 102 and the slave anchors 104, 106, 108 is updated at regular time intervals. The value $T_{update}$ may depend on system parameters including the number of anchors 102, 104, 106, 108, the maximum number of tags 10, and a level of synchronization accuracy.

In order to perform synchronization, the master anchor 102 exchanges tones with each of the slave anchors 104, 106, 108 in a sequential manner, as illustrated in Figs 2a-c. Thus, communication indicated by "Syn" in Fig. 9 corresponds to the master anchor 102 conducting two-way frequency-coherent phase-based measurement procedure with one of the slave anchors 104, 106, 108, as described in detail above.

After synchronization has been performed, the anchors 102, 104, 106, 108 may determine distance information relating to movable tag(s) 10. The distance information may be determined a plurality of times during the interval $T_{update}$ such that localization of the movable tag(s) 10 may be updated several times during the interval $T_{update}$.

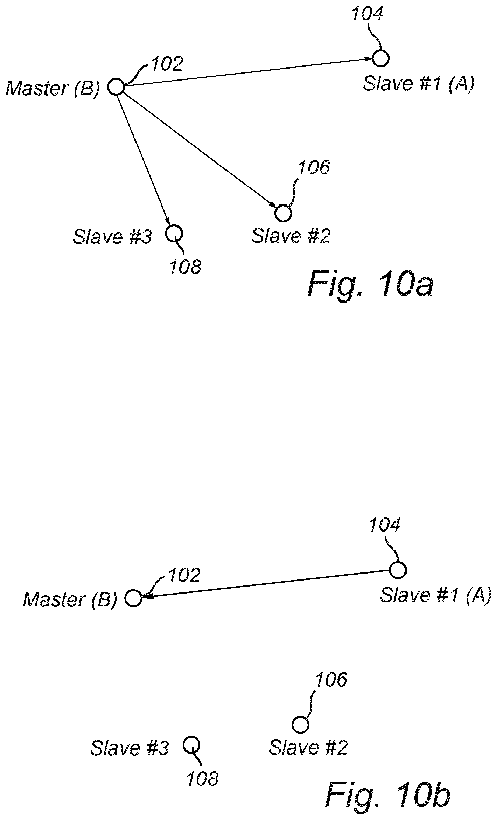

Referring now to Figs 10a-d, transmission of signals for synchronization of the anchors 102, 104, 106, 108 need not necessarily be performed entirely in a sequential manner as described above.

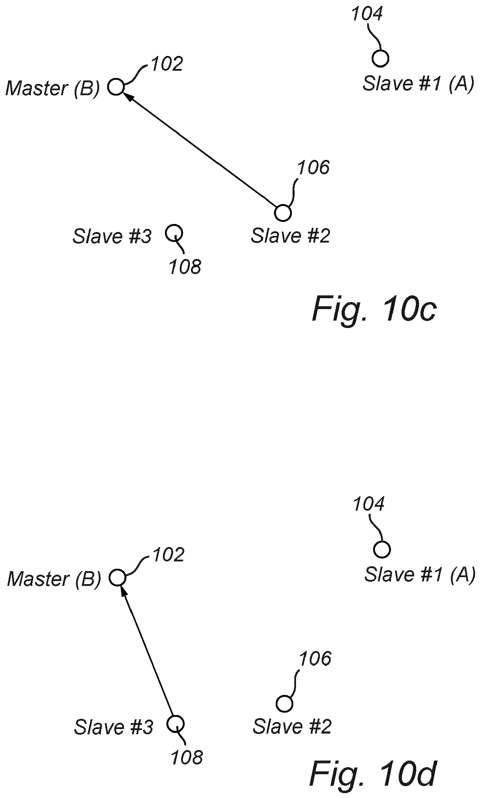

Figs 10a-d illustrate a sequence of signals transmitted by the anchors 102, 104, 106, 108 for each frequency in the first sequence and the second sequence. Thus, for each frequency (tone), the master anchor 102 first transmits its LO signal to all the slave anchors 104, 106, 108 (see Fig. 10a). Based on this signal, all the slave anchors 104, 106, 108 conduct one-way frequency-coherent phase-based measurements. Thereafter, the slave anchors 104, 106, 108 sequentially transmit their respective LO signals to the master anchor 102. The master anchor 102 thus sequentially conducts one-way frequency-coherent phase-based measurements based on the signals received from the slave anchors 104, 106, 108. Thus, the first slave anchor 104 conducts one-way frequency-coherent phase-based measurements with the master anchor 102 (see Fig. 10b), followed by the second slave anchor 106 conducting one-way frequency-coherent phase-based measurements with the master anchor 102 (see Fig. 10c), and followed by the third slave anchor 108 conducting one-way frequency-coherent phase-based measurements with the master anchor 102 (see Fig. 10d). In the scheme used in Figs 10a-d, the synchronization procedure takes less time compared to the scheme used in Figs 2a-c, since the master anchor 102 transmits each tone once to all the slave anchors 104, 106, 108.

As discussed above, once the anchors 102, 104, 106, 108 have a common time reference, 1WR may be used for localization of a movable tag 10.

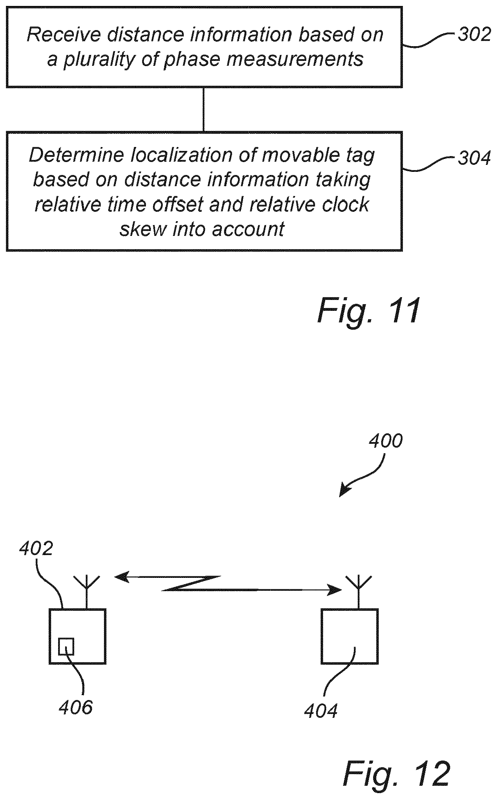

As illustrated in Fig. 11, a method for localization of a movable tag 10 in relation to the anchors 102, 104, 106, 108 may be provided using 1WR.

The method comprises receiving 302 distance information based on a plurality of phase measurements. The phase measurements may be performed based on signals transmitted in one direction only. The signals may be transmitted by the movable tag 10, which may broadcast the signals to all of the anchors 102, 104, 106, 108 or may sequentially transmit dedicated signals to each of the anchors 102, 104, 106, 108. In such case, each phase measurement is performed by the master anchor 102 and/or one of the slave anchors 104, 106, 108.

Alternatively, the signals are transmitted sequentially by the anchors 102, 104, 106, 108. Then, each phase measurement is performed by the movable tag 10 and each phase measurement is based on the signal transmitted by one of the anchors 102, 104, 106, 108.

Each phase measurement is representative of a respective distance between the movable tag 10 and the respective anchor 102, 104, 106, 108. Further, each phase measurement is related to a time of receipt of the signal. Thus, each anchor 102, 104, 106, 108 may measure a TOA of a signal from the tag 10 with respect to a local clock of the respective anchor 102, 104, 106, 108. Alternatively, the movable tag 10 may measure a TOA of a signal from a respective anchor 102, 104, 106, 108.

The method for localization further comprises determining 304 localization of the movable tag 10 based on the distance information. The distance information takes relative time offset and relative clock skew between the master anchor 102 and the plurality of slave anchors 104, 106, 108 into account.

By employing the above-described synchronization method, the master anchor 102 may estimate the relative clock skew and relative time offset with regard to each slave anchor 104, 106, 108, respectively. Given these estimates, and by using linear extrapolation, the master anchor 102 is able to translate the reported TOA from each slave anchor 104, 106, 108 to its own timing reference. Alternatively, it is also possible for the slave anchors 104, 106, 108 themselves to estimate the relative clock skew and relative time offset in relation the master anchor 102. Then, each slave anchor 102 may report the translated TOA to the master anchor 102.

It should also be realized that the determining of the localization of the movable tag 10 need not necessarily be performed by the master anchor 102. Alternatively, all of the anchors 102, 104, 106, 108 may transmit information of measured TOA to another entity in which the localization of the movable tag 10 may be determined taking the relative clock skew and relative time offset between the anchors 102, 104, 106, 108 into account.

Referring now to Fig. 12, a system 400 for estimating relative time offset and relative clock skew between a first radio signal transceiver 402 and a second radio signal transceiver 404 will be summarized. The system 400 may perform the method as described above.

The system 400 comprises a transceiver, exemplified here as the first radio signal transceiver 402, configured to receive signals at a first sequence of frequencies from the second radio transceiver and transmit signals at a second sequence of frequencies to the second radio signal transceiver 404. The switching of frequencies in the second sequence by the first radio signal transceiver 402 is performed in synchronization with a switching of frequency in the first sequence by the second radio signal transceiver 404, wherein switching of frequencies is performed by coherent frequency switching.

The first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values.

The first radio signal transceiver 402 is further configured to perform a phase measurement for each frequency of the first sequence of frequencies of the received signals.

The system 400 further comprises a processing unit 406. The processing unit 406 may for instance be arranged in the first radio signal transceiver 402 but may alternatively be arranged in a different physical entity. The processing unit 406 may be implemented as a general-purpose processing unit and the system 400 may further comprise a computer program product comprising computer-readable instructions such that when executed on the processing unit the computer program product will cause the processing unit 406 to perform the steps discussed below. However, the processing unit 406 may alternatively be implemented as firmware arranged, e.g., in an embedded system, or as a specifically designed processing unit, such as an Application-Specific Integrated Circuit (ASIC) or a Field-Programmable Gate Array (FPGA).

Based on the computer program product or on the design of the processing unit 406, the processing unit may be configured to receive coarse information relating to the relative time offset and relative clock skew; determine a first weighted average phase difference value between sequential frequency values in the first sub-sequence and a second weighted average phase difference value between sequential frequency values in the second sub-sequence; receive information relating to a third weighted average phase difference value between sequential frequency values in the third sub-sequence and a fourth weighted average phase difference value between sequential frequency values in the fourth sub-sequence based on phase measurements performed by the second radio transceiver for each frequency of the second sequence of frequencies; and determine a fine estimate of the relative time offset and relative clock skew based on the first, second, third, and fourth weighted average phase difference values.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A method for estimating relative time offset and relative clock skew between a first radio transceiver (102; 402) and a second radio transceiver (104; 404), said method comprising:

   receiving (202) coarse information relating to the relative time offset and relative clock skew;
   receiving (204), by the first radio transceiver (102; 402), signals at a first sequence of frequencies from the second radio transceiver (104; 404) and transmitting (206) signals at a second sequence of frequencies to the second radio transceiver (104; 404), wherein a switching of frequencies in the second sequence by the first radio transceiver (102; 402) is performed in synchronization with a switching of frequency in the first sequence by the second radio transceiver (104; 404), wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values;
   performing (208), by the first radio transceiver (102; 402), a phase measurement for each frequency of the first sequence of frequencies of the received signals;
   determining (210) a first weighted average phase difference value between sequential frequency values in the first sub-sequence and a second weighted average phase difference value between sequential frequency values in the second sub-sequence;
   receiving (212) information relating to a third weighted average phase difference value between sequential frequency values in the third sub-sequence and a fourth weighted average phase difference value between sequential frequency values in the fourth sub-sequence based on phase measurements performed by the second radio transceiver for each frequency of the second sequence of frequencies; and
   determining (214) a fine estimate of the relative time offset and relative clock skew based on the first, second, third, and fourth weighted average phase difference values.

2. The method according to claim 1, wherein the received signals and the transmitted signals are unmodulated signals.

3. The method according to claim 1 or 2, wherein the fine estimate of the relative time offset is determined with an accuracy better than 1 ns.

4. The method according to any one of the preceding claims, wherein the first (102; 402) and/or the second radio signal transceiver (104; 404) is configured to tune a clock oscillator based on the coarse information of relative clock skew.

5. The method according to any one of claims 1-4, wherein the first (102; 402) or the second radio signal transceiver (104; 404) is configured to manipulate phase and/or frequency of a clock signal based on the coarse information of relative clock skew to compensate for the relative clock skew.

6. The method according to any one of the preceding claims, wherein estimation of the relative time offset and the relative clock skew is updated at regular time intervals.

7. The method according to claim 6, wherein the first radio transceiver (102; 402) and the second radio transceiver (104; 404) are arranged at fixed locations at least during a time period for performing the estimation.

8. A method for estimating relative time offsets and relative clock skews between a master radio transceiver (102) and a plurality of slave radio transceivers (104, 106, 108), said method comprising:
   for each of the plurality of slave radio transceivers (104, 106, 108), performing the method according to any one of the preceding claims, wherein the master radio transceiver (102) acts as the first radio transceiver and a respective one of the plurality of slave radio transceivers (104, 106, 108) acts as the second radio transceiver.

9. The method according to claim 8, wherein the master radio transceiver (102) is configured to perform said transmitting signals once for all of the plurality of slave radio transceivers (104, 106, 108), wherein the slave radio transceivers (104, 106, 108) are configured to simultaneously perform phase measurements based on transmitted signals from the master radio transceiver (102).

10. A method for performing localization of a movable radio transceiver (10) in relation to a master radio transceiver (102) and a plurality of slave radio transceivers (104, 106, 108), said method comprising:

receive (302) distance information based on a plurality of phase measurements, wherein each phase measurement of the plurality of phase measurements is performed by the master radio transceiver (102) and/or one of the slave radio transceivers (104, 106, 108) of the plurality of slave radio transceivers for a signal transmitted by the movable radio transceiver (10) or each phase measurement of the plurality of phase measurements is performed by the movable radio transceiver (10) for a signal transmitted by the master radio transceiver (102) and/or one of the slave radio transceivers (104, 106, 108) of the plurality of slave radio transceivers, wherein each phase measurement is representative of a respective distance between the movable radio transceiver (10) and the master radio transceiver (102) or one of the plurality of slave radio transceivers (104, 106, 108) which performs the phase measurement, and wherein each phase measurement is related to a time of receipt of the signal;

determine (304) localization of the movable radio transceiver (10) based on the distance information, wherein the distance information takes relative time offset and relative clock skew between the master radio transceiver (102) and the plurality of slave radio transceivers (104, 106, 108) into account, wherein the relative time offset and relative clock skew is determined based on the method according to claim 8 or 9.

11. The method according to claim 10, wherein the plurality of phase measurements is performed using one-way ranging.

12. The method according to claim 10 or 11, wherein the received distance information is corrected based on relative time offset and relative clock skew such that the phase measurements of the plurality of phase measurements are related to a common time reference.

13. The method according to claim 10 or 11, further comprising accessing information relating to relative time offset and relative clock skew for adjusting received distance information based on the relative time offset and the relative clock skew.

14. A computer program product comprising computer-readable instructions such that when executed on a processing unit (406) the computer program product will cause the processing unit (406) to perform a method for estimating relative time offset and relative clock skew between a first radio transceiver (102; 402) and a second radio transceiver (104; 404), said method comprising:

receiving coarse information relating to the relative time offset and relative clock skew;

determine a first weighted average phase difference value and a second weighted average phase difference value, wherein the first weighted average phase difference value and the second weighted average phase difference value are determined based on the first radio signal transceiver (102; 402) receiving signals at a first sequence of frequencies from the second radio transceiver (104; 404) and transmitting signals at a second sequence of frequencies to the second radio transceiver (104; 404), wherein a switching of frequencies in the second sequence by the first radio transceiver (102; 402) is performed in synchronization with a switching of frequency in the first sequence by the second radio transceiver (104; 404), wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values; and the first radio signal transceiver (102; 402) performing a phase measurement for each frequency of the first sequence of frequencies of the received signals; wherein the first weighted average phase difference value represents phase differences between sequential frequency values in the first sub-sequence and the second weighted average phase difference value represents phase differences between sequential frequency values in the second sub-sequence;

receiving information relating to a third weighted average phase difference value between sequential frequency values in the third sub-sequence and a fourth weighted average phase difference value between sequential frequency values in the fourth sub-sequence based on phase measurements performed by the second radio transceiver (104; 404) for each frequency of the second sequence of frequencies; and

determining a fine estimate of the relative time offset and relative clock skew based on the first, second, third, and fourth weighted average phase difference values.

15. A system (100; 400) for estimating relative time offset and relative clock skew between a first radio transceiver (102; 402) and a second radio transceiver (104; 404), said system (100; 400) comprising:

a transceiver (102; 402) configured to:

receive signals at a first sequence of frequencies from the second radio transceiver (104; 404) and transmit signals at a second sequence of frequencies to the second radio transceiver (104; 404), wherein a switching of frequencies in the second sequence by the first radio transceiver (102; 402) is performed in synchronization with a switching of frequency in the first sequence by the second radio transceiver (104; 404), wherein switching of frequencies is performed by coherent frequency switching, and wherein the first sequence of frequencies comprises a first sub-sequence of increasing frequency values and a second sub-sequence of decreasing frequency values and the second sequence of frequencies comprises a third sub-sequence of increasing frequency values and a fourth sub-sequence of decreasing frequency values;

perform a phase measurement for each frequency of the first sequence of frequencies of the received signals; and

a processing unit (406) configured to:

receive coarse information relating to the relative time offset and relative clock skew;

determine a first weighted average phase difference value between sequential frequency values in the first sub-sequence and a second weighted average phase difference value between sequential frequency values in the second sub-sequence;

receive information relating to a third weighted average phase difference value between sequential frequency values in the third sub-sequence and a fourth weighted average phase difference value between sequential frequency values in the fourth sub-sequence based on phase measurements performed by the second radio transceiver (104; 404) for each frequency of the second sequence of frequencies; and

determine a fine estimate of the relative time offset and relative clock skew based on the first, second, third, and fourth weighted average phase difference values.

*Fig. 1*

*Fig. 2a*

*Fig. 2b*

*Fig. 2c*

*Fig. 3*

LO frequency of master B (——) and slave A (-----)

*Fig. 4a*

LO frequency of master B (——) and slave A (-----)

*Fig. 4b*

*Fig. 5*

*Fig. 6*

Receive coarse information relating
to relative time offset and relative
clock skew — 202

Receive signals at first sequence of
frequencies from second radio signal
transceiver — 204

Transmit signals at second sequence
of frequencies to second radio
signal transceiver — 206

Perform phase measurement for each
frequency of first sequence — 208

Determine first and second weighted
average phase difference values — 210

Receive third and fourth weighted
average phase difference values — 212

Determine fine estimate of relative
time offset and relative clock skew — 214

*Fig. 7*

Fig. 8

| | |
|---|---|
| Syn | Synchronization of the master with a slave |
| G | Guard interval |
| B | Tag blink |

Fig. 9

*104*

*102*

Master (B) ◯

Slave #1 (A) ◯

*106*

Slave #2 ◯

Slave #3 ◯

*108*

*Fig. 10a*

*104*

*102*

Master (B) ◯

Slave #1 (A) ◯

*106*

Slave #2 ◯

Slave #3 ◯

*108*

*Fig. 10b*

*104*

*102*

Master (B) ◯

Slave #1 (A)

*106*

Slave #3 ◯

Slave #2

*108*

*Fig. 10c*

*104*

*102*

Master (B) ◯

Slave #1 (A)

*106*

Slave #3 ◯

Slave #2

*108*

*Fig. 10d*

Receive distance information based on
a plurality of phase measurements — 302

Determine localization of movable tag
based on distance information taking
relative time offset and relative clock
skew into account — 304

*Fig. 11*

400

402

406

404

*Fig. 12*

Europäisches
Patentamt

European
Patent Office

Office européen
des brevets

# EUROPEAN SEARCH REPORT

**Application Number**

EP 23 17 2980

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/092797 A1 (AWEYA JAMES [AE]) 2 April 2015 (2015-04-02) * figure 1 * * paragraph [0010] – paragraph [0013] * * paragraph [0037] * * paragraph [0063] * * paragraph [0121] * | 1-15 | INV. H04W56/00 G01S5/00 G01S13/84 |
| A | ANH LUONG ET AL: "A stitch in time and frequency synchronization saves bandwidth", INFORMATION PROCESSING IN SENSOR NETWORKS, IEEE PRESS, 445 HOES LANE, PO BOX 1331, PISCATAWAY, NJ08855-1331USA, 11 April 2018 (2018-04-11), pages 96-107, XP058398482, DOI: 10.1109/IPSN.2018.00016 ISBN: 978-1-5386-5298-5 * figure 3 * * section 4.1 * | 1-15 | |
| A | EP 3 722 831 A1 (STICHTING IMEC NEDERLAND [NL]) 14 October 2020 (2020-10-14) * figures 1, 2, 3 * * paragraph [0005] * * paragraph [0014] – paragraph [0015] * * paragraph [0020] – paragraph [0021] * * paragraph [0050] – paragraph [0070] * | 1-15 | TECHNICAL FIELDS SEARCHED (IPC) H04W G01S |
| A | EP 3 502 736 B1 (STICHTING IMEC NEDERLAND [NL]) 25 January 2023 (2023-01-25) * figure 1 * * paragraph [0007] * * paragraph [0033] – paragraph [0034] * * paragraph [0037] – paragraph [0049] * | 1-15 | |

-/--

The present search report has been drawn up for all claims

| Place of search | Date of completion of the search | Examiner |
|---|---|---|
| The Hague | 30 October 2023 | Arroyo Valles, |

EPO FORM 1503 03.82 (P04C01)

page 1 of 2

Europäisches
Patentamt

European
Patent Office

Office européen
des brevets

# EUROPEAN SEARCH REPORT

Application Number

**EP 23 17 2980**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/095262 A1 (KAZAZ TARIK [NL] ET AL) 24 March 2022 (2022-03-24) <br> * figures 1-3 * <br> * paragraph [0027] * <br> * paragraph [0072] * <br> * paragraph [0075] – paragraph [0084] * <br> ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 30 October 2023 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...............................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 17 2980

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2023

| Patent document cited in search report | | Publication date | Patent family member(s) | | Publication date |
|---|---|---|---|---|---|
| US 2015092797 | A1 | 02-04-2015 | NONE | | |
| EP 3722831 | A1 | 14-10-2020 | EP | 3722831 A1 | 14-10-2020 |
| | | | US | 2020326403 A1 | 15-10-2020 |
| EP 3502736 | B1 | 25-01-2023 | EP | 3502736 A1 | 26-06-2019 |
| | | | JP | 7096754 B2 | 06-07-2022 |
| | | | JP | 2019113529 A | 11-07-2019 |
| | | | US | 2019187263 A1 | 20-06-2019 |
| US 2022095262 | A1 | 24-03-2022 | US | 2022095262 A1 | 24-03-2022 |
| | | | WO | 2020178459 A1 | 10-09-2020 |

EPO FORM P0459

For more details about this annex : see Official Journal of the European Patent Office, No. 12/82